(19) Europäisches Patentamt
European Patent Office
Office européen des brevets

(11) EP 1 860 067 B1

(12) EUROPÄISCHE PATENTSCHRIFT

(45) Veröffentlichungstag und Bekanntmachung des Hinweises auf die Patenterteilung:
**04.07.2012 Patentblatt 2012/27**

(51) Int Cl.:
***C01B 33/193*** *(2006.01)* ***C08K 3/36*** *(2006.01)*
***C09K 3/10*** *(2006.01)*

(21) Anmeldenummer: **07107962.8**

(22) Anmeldetag: **10.05.2007**

# (54) Fällungskieselsäuren mit speziellen Oberflächeneigenschaften

Precipitation chart with special surface properties

Acides siliciques dotés de propriétés de surface spéciales

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **26.05.2006 DE 102006024591**
**31.01.2007 DE 102007004757**

(43) Veröffentlichungstag der Anmeldung:
**28.11.2007 Patentblatt 2007/48**

(73) Patentinhaber: **Evonik Degussa GmbH**
**45128 Essen (DE)**

(72) Erfinder:
- **Panz, Christian**
  **50389, Wesseling-Berzdorf (DE)**
- **Obladen, Helga**
  **50321, Brühl (DE)**
- **Allerdisse, René**
  **53332, Bornheim (DE)**
- **Meier, Karl**
  **53347, Alfter (DE)**
- **Ruf, Markus**
  **53347, Alfter-Witterschlick (DE)**
- **Kempf, Michael**
  **63517, Rodenbach (DE)**
- **Scholz, Mario**
  **63584, Gründau (DE)**
- **Kuhn, Dieter**
  **63517, Rodenbach (DE)**

(56) Entgegenhaltungen:
**EP-A1- 0 901 986** **DE-C- 879 834**
**US-A- 5 004 869**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 860 067 B1

## Beschreibung

Die vorliegende Erfindung betrifft Fällungskieselsäuren, mit einer speziellen Oberflächenbeschaffenheit, ein Verfahren zu deren Herstellung und deren Verwendung zur Verdickung von Dichtungsmassen.

Unter Dichtungsmassen sind elastische, in flüssiger bis zähflüssiger Form aufgebrachte Stoffe zum Abdichten von Gebäuden oder Einrichtungen gegen Wasser, atmosphärischen Einfluss oder aggressive Medien zu verstehen.

Siliconkautschuke sind in den gummielastischen Zustand überführbare Massen, welche als Grundpolymere Polydiorganosiloxane enthalten, die Vernetzungsreaktionen zugängliche Gruppen aufweisen. Als solche kommen vorwiegend H-Atome, OH-Gruppen und Vinyl-Gruppen in Frage, die sich an den Kettenenden befinden, aber auch in die Kette eingebaut sein können. In dieses System sind Füllstoffe als Verstärker eingearbeitet, deren Art und Menge das mechanische und chemische Verhalten der Vulkanisate deutlich beeinflussen. Siliconkautschuke können durch anorganische Pigmente gefärbt werden. Man unterscheidet zwischen heißvulkanisierenden und kaltvulkanisierenden Siliconkautschuken (high / room temperature vulcanizing = HTV/RTV).

Bei den kalthärtenden oder RTV-Siliconkautschuk-Massen lassen sich Einkomponentensysteme und Zweikomponentensysteme unterscheiden. Die erste Gruppe (RTV-1K) polymerisiert langsam bei Raumtemperatur unter dem Einfluss von Luftfeuchtigkeit, wobei die Vernetzung durch Kondensation von SiOH-Gruppen unter Bildung von Si, O-Bindungen erfolgt. Die SiOH-Gruppen werden durch Hydrolyse von SiX-Gruppen einer intermediär aus einem Polymer mit endständigen OH-Gruppen und einem sogenannten Vernetzer $R\text{-}SiX_3$ (z. B. X = $-O-CO-CH_3$, -NHR) entstehenden Spezies gebildet. Bei Zweikomponentenkautschuken (RTV-2K) werden als Vernetzer z. B. Gemische aus Kieselsäureestern (z.B. Ethylsilicat) und Zinn-organische Verbindungen verwendet, wobei als Vernetzungsreaktion die Bildung einer Si-O-Si-Brücke aus =Si-OR u. =Si-OH (- = Methylgruppe; R = organischer Rest) durch Alkohol-Abspaltung erfolgt.

Zur Verdickung von RTV-1K-Siliconkautschuk werden u.a. Kieselsäuren eingesetzt. Diese dürfen aufgrund der Hydrolyseempfindlichkeit der Silicondichtungsmassen möglichst wenig Feuchte in das System einbringen. Daher werden bisher fast ausschließlich pyrogene Kieselsäuren für diese Anwendung eingesetzt. Hydrophile Fällungskieselsäuren konnten aufgrund ihrer hohen Feuchtegehalte bisher nicht verwendet werden.

WO 2005/061384 zeigt die Herstellung und Verwendung, u.a. in Siliconkautschuk, von Kieselsäuren welche laut Anspruch eine Wasseraufnahme von < 6 % und einer DOP > 300 ml/100 g aufweisen sollen. Die in den Beispielen der WO 2005/061384 offenbarten Kieselsäuren weisen jedoch allesamt eine Wasseraufnahme zwischen 5,7 und 5,9 % auf und sind somit nicht für den Einsatz in RTV-1K Formulierungen geeignet. Folgerichtig wird in der WO 2005/061384 nur die Anwendung in Siliconkautschukformulierungen für Extrusionsverfahren (HTV) beschrieben

In EP 1557446 werden ausschließlich HTV-Siliconkautschukformulierungen beschrieben. Die dort eingesetzten Kieselsäuren weisen einen Trocknungsverlust von < 4% auf. Die in der EP 1557446 offenbarten Formulierungen werden zur Herstellung von Isoliermaterialien wie z. B. Kabelummantelungen verwendet.

Zusammenfassend lässt sich somit feststellen, dass im Stand der Technik keine Fällungskieselsäuren offenbart werden, welche die hohen Anforderungen für den Einsatz in RTV-1K-Silikonkautschuk erfüllen. Daher besteht ein starker Bedarf nach solchen, für RTV-1K-Anwendungen geeigneten, Fällungskieselsäuren.

Ausgehend von dem zuvor beschriebenen Stand der Technik bestand die Aufgabe der vorliegenden Erfindung darin, Fällungskieselsäuren bereit zu stellen, bei denen die zuvor geschilderten Nachteile der Fällungskieselsäuren des Standes der Technik ganz oder zumindest teilweise beseitigt wurden. Ferner soll ein Verfahren zur Herstellung der erfindungsgemäßen Kieselsäuren zur Verfügung gestellt werden.

Weitere nicht explizit genannte Aufgaben ergeben sich aus dem Gesamtzusammenhang der Beschreibung, Beispiele und Ansprüche.

Überraschenderweise wurde gefunden, dass diese Aufgabe durch die in der nachfolgenden Beschreibung sowie in den Ansprüchen und den Beispielen näher definierten erfindungsgemäßen Fällungskieselsäuren gelöst wird.

Gegenstand der vorliegenden Erfindung, sind daher Fällungskieselsäuren, dadurch gekennzeichnet, das sie ein Extinktionsverhältnis $SiOH_{isoliert}$ von größer gleich 1 aufweisen, wobei das Extinktionsverhältnis $SiOH_{isoliert}$ mittels IR-Spektroskopie, wie im Absatz der Beschreibung mit der Überschrift IR-Bestimmung beschrieben, ermittelt wird.

Gegenstand der Erfindung sind auch Fällungskieselsäuren, bevorzugt hydrophile Fällungskieselsäuren, die neben den genannten Parametern, unabhängig voneinander, einen oder mehrere der folgenden physikalisch-chemischen Parameter aufweisen:

| | |
|---|---|
| Silanolgruppendichte | 0,5 - 3,5 $SiOH/nm^2$ |
| modifizierte Stampfdichte | < 70 g/l |
| BET-Oberfläche | 50 - 600 $m^2/g$ |
| CTAB-Oberfläche | 50 - 350 $m^2/g$ |
| DBP (wasserfrei) | 150 - 400 g/100g |
| Glühverlust | 0,1 - 3,0 Gew.-% |

(fortgesetzt)

| | |
|---|---|
| Trocknungsverlust | 0,1 - 3,0 Gew.-% |
| pH-Wert | 4 - 9 |

Anteil an Partikeln < 1 μm in der volumen-

bezogene Partikelverteilung 5 bis 100 %

$d_{90}$-Wert der volumenbezogenen

Partikelverteilung 0,001 bis 10 μm.

Ein weiterer Gegenstand der vorliegenden Erfindung ist ein Verfahren zur Herstellung der erfindungsgemäßen Fällungskieselsäuren.

Ein weiterer Gegenstand der vorliegenden Erfindung ist die Verwendung der erfindungsgemäßen Kieselsäuren in Dichtungsmassen, insbesondere in Siliconkautschuk bzw. Silicondichtungsmassen und besonders bevorzugt in RTV-1K-Dichtungsmassen. Die Anwendung ist möglich in verschiedenen Vernetzungssystemen, z. B. acetoxy-vernetzend, alcoxy-vernetzend und oxim-vernetzend. Diese Systeme finden Anwendung z.B. in der Bauindustrie als Fugendichtungsmassen, in der Automobilindustrie als Kleb- und Dichtstoff und als Beschichtungsmassen für z.B. Textilgewebe.

Ein weiterer Gegenstand der Erfindung sind Dichtungsmassen auf Basis von Siliconkautschuk, die die erfindungsgemäßen Kieselsäuren enthalten, und deren Verwendung.

Die erfindungsgemäßen Fällungskieselsäuren haben auf Grund Ihrer speziellen Struktur und Oberflächenbeschaffenheit den Vorteil, das sie nach Einarbeitung in Siliconkautschukmassen, speziell des Typs RTV-1K, eine hohe Lagerstabilität, eine hohe Standfestigkeit und einen optimalen Fließpunkt des Siliconkautschuks gewährleisten.

Ein weiterer Vorteil der erfindungsgemäßen Fällungskieselsäuren wird durch ihre niedrige modifizierte Stampfdichte bedingt. Die niedrige modifizierte Stampfdichte entsteht durch eine sehr lockere Packung der Kieselsäurepartikel. Das heißt, dass sich die Kieselsäurepartikel einerseits zwar berühren und leicht aneinander haften, andererseits aber so locker gepackt sind, dass große Hohlräume entstehen. Diese lockere Packung entsteht auch im Silikoncompound und trägt damit zur der hohen Thixothropie des Silikoncompounds bei.

In Summe führen die besonderen Eigenschaften der erfindungsgemäßen Fällungskieselsäuren unter anderem zu folgenden Vorteilen:

- hohe Lagerstabilität von RTV-1K-Siliconkautschukmassen nach Einarbeitung der erfindungsgemäßen Kieselsäuren,
- gute und schnelle Dispergierung und damit hohe Verdickungswirkung der Kieselsäure in RTV-1K-Siliconkautschukmassen.

Darüber hinaus bieten die erfindungsgemäßen Fällungskieselsäuren gegenüber den bisher in RTV1-Siliconkautschuk eingesetzten pyrogenen Kieselsäuren einen wesentlichen Kostenvorteil, da sie kostengünstiger hergestellt werden können.

Die Gegenstände der Erfindung werden nachfolgend im Detail beschrieben.

In der vorliegenden Erfindung werden die Begriffe Kieselsäure und Fällungskieselsäure synonym verwendet. Unter **hydrophilen** Fällungskieselsäuren sind dabei solche zu verstehen, deren Oberfläche sich beim Einrühren in Wasser hydrophil verhält, d.h. deren Oberfläche von Wasser vollständig benetzt wird und somit gegenüber Wasser einen Kontaktwinkel, der kleiner als 90° ist, aufweist. Die erfindungsgemäßen hydrophilen Fällungskieselsäuren haben bevorzugt einen Kohlenstoffgehalt von < 0,5 Gew.-%.

Die erfindungsgemäßen Kieselsäuren zeichnen sich dadurch aus, das sie einen besonders großen Anteil an isolierten SiOH-Gruppen, ausgedrückt durch das **Extinktionsverhältnis $SiOH_{isoliert}$**, auf ihrer Oberfläche aufweisen. Das Extinktionsverhältnis $SiOH_{isoliert}$ der erfindungsgemäßen Kieselsäuren ist größer gleich 1, bevorzugt zwischen 1,5 und 10, besonders bevorzugt zwischen 1,5 und 7, ganz besonders bevorzugt zwischen 1,8 und 5, speziell bevorzugt zwischen 2 und 4,5, ganz speziell bevorzugt zwischen 2,3 und 4,0 und insbesondere bevorzugt zwischen 2,3 und 3,5. Diese besondere Oberflächenbeschaffenheit der erfindungsgemäßen Kieselsäuren ist eine wesentliche Eigenschaft, die dazu führt, dass die Kieselsäuren in Siliconkautschukformulierungen zu einer hohen Lagerstabilität, zu einer verbesserten Standfestigkeit und zu einem optimierten Fließverhalten führt.

Ohne an eine spezielle Theorie gebunden zu sein ist können die speziellen Eigenschaften der erfindungsgemäßen Kieselsäuren durch die hohe Anzahl der isolierten SiOH-Gruppen und zugleich deren großen Abstand erklärt

werden. Diese beiden Eigenschaften erschweren die Bildung von Wasserstoffbrückenbindungen und das Anlagern von Wassermolekülen auf der Kieselsäureoberfläche.

Aus den o. g. Gründen kann es vorteilhaft sein, wenn die erfindungsgemäßen Kieselsäuren eine niedrige **Silanolgruppendichte**, d. h. einen weiten Abstand der Silanolgruppen auf der Kieselsäureoberfläche, aufweisen. Zur Bestimmung der Silanolgruppendichte wird zunächst mittels $LiA1H_4$ die Anzahl der Silanolgruppen auf der Oberfläche der Kieselsäure ermittelt. Diese allein ist jedoch nicht aussagekräftig, da Fällungskieselsäuren mit hoher Oberfläche in der Regel eine höhere absolute Anzahl an Silanolgruppen aufweisen als Fällungskieselsäuren mit einer niedrigen Oberfläche. Daher ist die Silanolgruppenanzahl auf die Oberfläche der Kieselsäure zu beziehen. Als geeignete Oberfläche bietet sich hierfür die BET-Oberfläche an, da diese die Oberfläche beschreibt, die auch kleineren Molekülen wie z. B. Wasser zugänglich ist. Die Silanolgruppendichte der erfindungsgemäßen Kieselsäuren liegt bevorzugt im Bereich von 0,5 bis 3,5 SiOH/$nm^2$, bevorzugt von 0,5 bis 3,0 SiOH/$nm^2$, besonders bevorzugt von 1,0 bis 2,8 SiOH/$nm^2$ und ganz besonders bevorzugt von 1,5 bis 2,8 SiOH/$nm^2$. Ist die Anzahl an Silanolgruppen pro $nm^2$ zu niedrig, so kann dies eine zu niedrige Fließgrenze bewirken und sich dadurch negativ auf die Standfestigkeit der Silicondichtungsmassen auswirken.

Die spezifische **BET-Oberfläche** beschreibt den Einfluss der Kieselsäure auf das Einarbeitungsverhalten in den Siliconkautschuk sowie die Rohmischungseigenschaften (vgl. S. Brunauer, P. H. Emmett, E. Teller, "Adsorption of Gases in Multimolecular Layers", J. Am. Chem. Soc. 60, 309 (1938)). So können die erfindungsgemäßen Kieselsäuren eine BET-Oberfläche 50 bis 600 $m^2$/g, bevorzugt 50 bis 400 $m^2$/g, besonders bevorzugt 50 bis 250 $m^2$/g, ganz besonders bevorzugt von 80 bis 230 $m^2$/g, speziell bevorzugt von 100 bis 180 $m^2$/g, ganz speziell bevorzugt von 125 bis 180 $m^2$/g und insbesondere bevorzugt von 140 bis 170 $m^2$/g aufweisen.

Die spezifische **CTAB-Oberfläche** ist vorwiegend für die Verstärkungseigenschaft der Kieselsäure von entscheidender Bedeutung (vgl. Janzen, Kraus, Rubber Chem. Technol. 44, 1287 (1971)). Das Verstärkungspotential steigt mit zunehmender CTAB-Oberfläche. So können die erfindungsgemäßen Fällungskieselsäuren eine CTAB-Oberfläche von 50 bis 350 $m^2$/g, besonders bevorzugt 50 bis 250 $m^2$/g, ganz besonders bevorzugt von 80 bis 230 $m^2$/g, speziell von 100 bis 200 $m^2$/g, ganz speziell bevorzugt von 125 bis 190 $m^2$/g und insbesondere bevorzugt von 140 bis 190 $m^2$/g aufweisen.

Es hat sich weiterhin herausgestellt, das eine hohe **DBP-Aufnahme** der erfindungsgemäßen Kieselsäuren von Nutzen ist, um gute rheologische Eigenschaften zu erzielen. Zu hohe DBP-Werte können allerdings zu einer übermäßigen Viskositätserhöhung des Siliconkautschuks führen und sollten daher vermieden werden. Die erfindungsgemäßen Kieselsäuren weisen daher bevorzugt eine DBP-Aufnahme von 150 bis 400 g/(100g), besonders bevorzugt 200 bis 350 g/(100 g), ganz besonders bevorzugt von 220 bis 330 g/(100 g), speziell bevorzugt 250 bis 330 g/(100 g) und ganz speziell bevorzugt 260 bis 320 g/(100 g) auf.

In einer speziellen Ausführungsform weisen die erfindungsgemäßen Fällungskieselsäuren eine niedrige modifizierte Stampfdichte und somit eine ganz besonders gute Thixothropie auf. Hierbei ist zu beachten, das mit der modifizierten Stampfdichte die Stampfdichte gemessen am unverdichteten Material gemeint ist. Um diese Größe auch an bereits durch Verpackung und Lagerung vorverdichtetem Materialien bestimmen zu können, ist eine Probenpräparation, wie sie im Abschnitt "Bestimmung der **modifizierten Stampfdichte"** beschrieben ist, durchzuführen. Die erfindungsgemäßen Kieselsäuren weisen bevorzugt eine modifizierte Stampfdichte von kleiner gleich 70 g/l, bevorzugt von 1 bis 60 g/l, besonders bevorzugt von 5 bis 55 g/l, ganz besonders bevorzugt von 10 bis 50 g/l und insbesondere bevorzugt von 10 bis 30 g/l auf.

Die Erfinder haben zudem festgestellt, das es für die Standfestigkeit der Silicondichtungsmassen von besonderem Vorteil sein kann, wenn die erfindungsgemäßen Fällungskieselsäuren einen ausreichenden Anteil an feinen Partikeln, d. h. an Partikeln < 1 $\mu$m, aufweisen. Dies trifft auf alle zuvor beschriebenen Ausführungsformen zu. Daher weisen die erfindungsgemäßen Kieselsäuren im Partikelgrößenbereich < 1 $\mu$m der **volumenbezogenen Partikelverteilung** bevorzugt einen Anteil an feinen Partikeln von 5 bis 100 %, bevorzugt 10 bis 95%, besonders bevorzugt 10 bis 95 %, ganz besonders bevorzugt 15 bis 90 %, speziell bevorzugt 20 bis 90%, speziell bevorzugt 20 bis 80% und insbesondere bevorzugt von 50 bis 80 % auf.

Auch wurde festgestellt, das ein zu hoher Anteil an groben Partikeln die anwendungstechnischen Eigenschaften der erfindungsgemäßen Fällungskieselsäuren negativ beeinflussen kann. Daher zeichnen sich die erfindungsgemäßen Kieselsäuren bevorzugt dadurch aus, das bezogen auf die volumenbezogene Partikelverteilungskurve der $d_{90}$ -Wert zwischen 0,01 und 10 $\mu$m, bevorzugt zwischen 1 uns 10 $\mu$m, besonders bevorzugt zwischen 2 und 8 $\mu$m und insbesondere bevorzugt zwischen 3 und 7 $\mu$m ist.

Die Partikelverteilungen können monomodal oder bimodal, vorzugsweise bimodal sein.

Es wurde auch festgestellt, das es für alle zuvor beschriebenen Ausführungsformen der erfindungsgemäßen Kieselsäuren besonders vorteilhaft sein kann, wenn die Kieselsäure von vornherein möglichst wenig Feuchtigkeit mit in die Silikondichtungsmasse einbringt. Die erfindungsgemäßen Kieselsäuren können daher eine Anfangsfeuchte, ausgedrückt durch den **Trocknungsverlust**, von 0,1 bis 3,0 Gew. %, bevorzugt 0,2 bis 2,5 Gew.-%, besonders bevorzugt 0,3 bis 2,0 Gew.-% und insbesondere bevorzugt 0,4 bis 1,8 Gew.-% und/oder einen **Glühverlust** von 0,1 - 3,0 Gew.

%, bevorzugt 0,2 bis 3,0 Gew.-%, besonders bevorzugt 0,3 bis 2,0 Gew.-% und insbesondere bevorzugt 0,4 bis 1,8 Gew.-% aufweisen.

Schließlich wurde festgestellt, das es für alle zuvor beschriebenen Ausführungsformen der erfindungsgemäßen Kieselsäuren besonders vorteilhaft sein kann, wenn die Kieselsäure einen pH-Wert: im Bereich von 4 bis 8, bevorzugt 4,5 bis 7,5 aufweist. Wenn der pH-Wert zu hoch ist, dann kann es vorkommen, das der Silikoncompound nach einer längeren Lagerung (z. B. nach mehreren Tagen) nicht mehr ordnungsgemäß vernetzt und klebrig bleibt.

Die genannten Vorzugsbereiche können unabhängig voneinander eingestellt werden.

Die erfindungsgemäßen Kieselsäuren können nach einem Verfahren hergestellt werden, das die nachfolgend beschriebenen Schritte

1. Umsetzung von zumindest einem Silikat mit zumindest einem Säuerungsmittel

2. Filtration und Waschen der erhaltenen Kieselsäure

3. Trocknung der erhaltenen Kieselsäure bzw. des Filterkuchens

4. Temperung der getrockneten Kieselsäure <u>in einem Wirbelbett- oder Fließbettreaktor</u>

umfasst.

Schritt 1 umfasst dabei bevorzugt die Teilschritte

1a Herstellung einer Vorlage aus Wasser bzw. Wasser und zumindest einem Silikat und/oder einer Silikatlösung, wobei der pH-Wert der so erhaltenen Vorlage bevorzugt zwischen pH 5 und pH 10 und die Temperatur der Vorlage bevorzugt zwischen 80 und 100 °C liegt.

1b Dosierung zumindest einem Silikat und/oder einer Silikatlösung und zumindest eines Säuerungsmittels unter Rühren bei 80 bis 100 °C in die Vorlage aus Teilschritt 1a) , so lange, bis ein Feststoffgehalt der Fällsuspension erreicht ist, der zu dem in Teilschritt 1c) zu erreichenden Feststoffgehalt führt. Dabei erfolgt die Zugabe von Silikat und/oder Silikatlösung und Säuerungsmittel besonders bevorzugt gleichzeitig und/oder so, das der pH-Wert für die Dauer von Teilschritt 1b) konstant auf einem Wert zwischen pH 7 und pH 10 gehalten wird

1c Zugabe eines Säuerungsmittels bei einer Temperatur der Fällsuspension von 80 bis 100 °C, so das der pH-Wert der Fällsuspension auf 2 bis 6 erniedrigt wird und der Feststoffgehalt der Fällsuspension am Ende dieses Teilschritts zwischen 30 und 70 g/l liegt.

Bevorzugt werden die erfindungsgemäßen Kieselsäuren vermahlen. Dies erfolgt besonders bevorzugt so, das die erfindungsgemäßen Kieselsäuren in einem Schritt 3a, d. h. zwischen den Schritten 3 und 4 oder in einem Schritt 5, d. h. nach Schritt 4, oder sowohl in Schritt 3a, d. h. zwischen Schritt 3 und 4, als auch in Schritt 5, d. h. nach Schritt 4, vermahlen werden.

Alle bekannten Silikatformen kommen für die in Schritt 1) des erfindungsgemäßen Verfahrens eingesetzten Silikate bzw. Silikatlösungen in Frage. Bevorzugt handelt es sich bei den erfindungsgemäß eingesetzten Silikaten um alkalische Silikate, z. B. Natrium- oder Kaliumsilikate. Besonders bevorzugt handelt es sich in Schritt 1 um Natriumsilikat (Wasserglas). Dessen Gewichtsverhältnis von $SiO_2$ zu $Na_2O$ liegt zwischen 2 und 4, bevorzugt zwischen 3 und 3,6 und besonders bevorzugt zwischen 3,3 und 3,5. Der Gehalt an $SiO_2$ liegt bevorzugt zwischen 20 und 40 Gew.-%, bevorzugt zwischen 25 und 30 Gew.-%.

Unter Säuerungsmittel sind saure Verbindungen organischer oder anorganischer Natur zu verstehen, mit deren Hilfe der pH-Wert der Fällsuspension erniedrigt werden kann. Bevorzugt können anorganische Säuren wie Salzsäure, Phosphorsäure, Schwefelsäure oder Salpetersäure oder organische Säuren wie Essigsäure, Ameisensäure oder Kohlensäure bzw. Kohlendioxid eingesetzt werden. Es können sowohl verdünnte als auch konzentrierte Säuren verwendet werden. Besonders bevorzugt wird in dem erfindungsgemäßen Verfahren Schwefelsäure eingesetzt.

Zumeist sind das eingesetzte Silikat und/oder die Silikatlösung sowie Säuerungsmittel in den Teilschritten 1a) bis 1c) identisch.

Der pH-Wert der Vorlage in Teilschritt 1a) liegt bevorzugt zwischen pH 7 und pH 10, besonders bevorzugt zwischen pH 8 und pH 9. Die Temperatur der Vorlage wird auf 80 bis 100 °C, bevorzugt auf 85 bis 95 °C eingestellt.

Im Teilschritt 1b) werden Silikat und Säuerungsmittel bevorzugt gleichzeitig zudosiert. Die Zugabe der beiden Komponenten erfolgt bevorzugt kontinuierlich gleichbleibend über die gesamte Dauer von Teilschritt 1b). Die Temperatur bleibt während dessen bei 80 bis 100 °C, bevorzugt auf 85 bis 95 °. Die Dauer der Zugabe erfolgt so lange, bis der am Ende von Schritt 1c) zu erreichende Feststoffgehalt erreicht ist. Es kann dabei notwendig sein, das die Fällung über den Viskositätsanstiegspunkt hinaus fortgesetzt wird. Dieser Viskositätsanstiegspunkt entspricht dabei dem Zeitpunkt, bei dem ein starkes Ansteigen der Viskosität der Fällsuspension im Fällverlauf, vgl. dazu EP 0643015, zu beobachten

ist. Während des Teilschritts 1b), in dem das Ausfällen der Kieselsäure beginnt, wird der pH-Wert möglichst konstant bei einem pH-Wert zwischen pH 7 und pH 10, bevorzugt konstant bei einem pH-Wert zwischen pH 7,5 und 9,5 und ganz besonders bevorzugt bei einem pH-Wert zwischen pH 8 und 9, gehalten. Korrekturen eines abweichenden pH-Wertes erfolgen in der Regel über ein Erhöhen oder Erniedrigen der Zugabe des Säuerungsmittels, so das eingestellte pH-Wert vorzugsweise nur um ± 0,2 pH-Einheiten, besonders bevorzugt nur um ± 0,1 pH-Einheiten schwankt.

Durch Zugabe eines Säuerungsmittels bei einer Temperatur der Fällsuspension von 80 bis 100 °C wird in Teilschritt 1c) deren pH-Wert auf 2 bis 6, bevorzugt auf pH 3 bis 6, besonders bevorzugt auf pH 3 bis pH 4, erniedrigt. Der Feststoffgehalt der Fällsuspension am Ende dieses Teilschritts liegt zwischen 30 und 70 g/l, bevorzugt zwischen 45 und 60 g/l und ganz besonders bevorzugt zwischen 45 und 55 g/l.

Ohne in irgendeiner Weise an eine besondere Theorie gebunden zu sein, soll im Teilschritt 1b) durch die geeignete Wahl der Prozessparameter eine kettenförmige Struktur der Aggregate aufgebaut werden. Durch das entsprechend langsame weitere Auffällen auch nach dem Viskositätsanstiegspunkt wird eine Verstärkung dieser bis dahin recht losen Aggregatstruktur erreicht.

Die Dosiergeschwindigkeiten in Schritt 1b) sind in allen Ausführungsformen des erfindungsgemäßen Verfahrens sowohl vor als auch nach dem Viskositätsanstiegspunkt so zu wählen, das der zu erzielende Feststoffgehalt nach Ansäuerung im Schritt 1c) von 30 bis 70 g/l erreicht wird.

Die Filtration, Verflüssigung (z. B. gemäß DE 2447613) und Lang- oder Kurzzeittrocknung der erfindungsgemäßen Kieselsäuren sind dem Fachmann geläufig und können z. B. in den in der Beschreibung genannten Dokumenten nachgelesen werden. Die Filtration und das Waschen der Kieselsäure erfolgt bevorzugt in der Art und Weise, das die Leitfähigkeit des Endprodukts < 1000 $\mu$s/cm, bevorzugt < 500 $\mu$s/cm und besonders bevorzugt < 200 $\mu$s/cm beträgt.

Bevorzugt wird die erfindungsgemäße Kieselsäure in einem Stromtrockner, Sprühtrockner, Etagentrockner, Bandtrockner, Drehrohrtrockner, Flash-Trockner, Spin-Flash-Trockner oder Düsenturmtrockner getrocknet. Diese Trocknungsvarianten schließen den Betrieb mit einem Atomizer, einer Ein- oder Zweistoffdüse oder einem integrierten Fließbett ein. Die Sprühtrocknung kann z. B. gemäß US 4094771 durchgeführt werden.

Wird als Trocknungsart die Sprühtrocknung gewählt, so ist der Filterkuchen zuvor zu redispergieren. Die Redispergierung erfolgt vorzugsweise in Wasser bzw. wässriger Säure so, das die Dispersion einen pH-Wert von 4 bis 7 aufweist Dabei ist darauf zu achten, das die Kieselsäuredispersion nach beendeter Redispergierung einen Feststoffgehalt von 5 bis 18, bevorzugt 8 bis 13 Gew.-%, besonders bevorzugt 9 bis 11% aufweist und das bei der Redispergierung keine zu starken Scherkräften auf die Kieselsäure einwirken. Dies kann z. B. durch Umrühren mit einer Drehzahl von < 1000 U/min erreicht werden, wobei bevorzugt raumübergreifend und nicht punktuell gerührt wird. Bevorzugt wird die redispergierte Kieselsäuredispersion so in den Sprühtrockner dosiert, das sich am Trockneraustritt eine Temperatur von 100 bis 170 °C, bevorzugt 130 - 160 °C einstellt.

Ein wesentlicher Schritt zur Einstellung der Silanolgruppendichte und Anordnung der Silanolgruppen auf der Kieselsäureoberfläche, neben der Fällung, bei der die kettenförmige Struktur aufgebaut wird, ist die in Schritt 4 durchzuführende Temperung. Diese Temperung kann batchweise oder kontinuierlich durchgeführt werden. kann z. B. ein Wirbelbett-, Fließbett-, oder Dabei ist darauf zu achten, dass während der Temperung eine homogene Temperaturverteilung und eine homogene Prozessgasathmosphäre sichergestellt wird, so das alle Kieselsäurepartikel gleichen Bedingungen ausgesetzt werden. Das Prozessgas muß eine ausreichende Wasserdampfkonzentration aufweisen. Bevorzugt beträgt die Wasserdampfkonzentration 10 bis 95 Vol.-%, besonders bevorzugt 40 bis 90 Gew.-%, ganz besonders bevorzugt 50 bis 90 Gew. %.

Insbesondere bei Verwendung eines Drehrohrreaktors ist darauf zu achten, das überall gleiche Temperaturen herrschen, d. h. keine "Kühlzonen" existieren, in denen der Wasserdampf kondensieren könnte. Durch den kondensierten Wasserdampf kann es zu einer Verklumpung der Kieselsäuren kommen. Die besonderen Bedingungen bei der erfindungsgemäßen Temperung stellen daher auch sicher, das eine bereits vor der Temperung vermahlene Kieselsäure nach der Temperung nicht noch einmal vermahlen werden muss, d. h. keine Verbackungen oder Verklumpungen gebildet werden, die durch eine Vermahlung nach der Temperung wieder entfernt werden müssten.

Unter einem Wirbelbett ist Folgendes zu verstehen:

Wenn auf waagerechten, perforierten Böden lagerndes feinkörniges Schüttgut von unten von Gasen durchströmt wird, stellt sich unter bestimmten Strömungsbedingungen ein Zustand ein, der dem einer kochenden Flüssigkeit ähnelt; die Schicht wirft Blasen auf; die Teilchen des Schüttgutes befinden sich innerhalb der Schicht in einer ständigen, wirbelnden Auf- und Abbewegung und bleiben so gewissermaßen in der Schwebe. Man spricht deshalb auch von Schwebebett, Wirbelbett, Fließbett sowie von Fluidisieren. Die damit verbundene große Oberfläche des Wirbelgutes erleichtert auch das Trocknen und Tempern von Festkörpern.

Es ist wichtig, das während der Temperung alle Kieselsäurepartikel der gleichen Temperatur und dem gleichen Prozessgas ausgesetzt sind. Die Temperaturunterschiede zwischen den heißesten und kältesten Stellen sollen möglichst klein sein. Deshalb darf auch die Temperatur der Filterkerzen nicht unter der Produkttemperatur liegen.

Ganz besonders bevorzugt erfolgt die Temperung in Schritt 4 des erfindungsgemäßen Verfahrens gemäß den nachfolgenden Teilschritten 4a) bis 4e) :

4a. Einfüllen der Kieselsäure in den Wirbelbettreaktor

4b. Vorheizen des Reaktors auf 300 bis 800 °C, wobei gleichzeitig der Reaktor von einem Inertgas und/oder Stickstoff-Luft-Gemisch so durchströmt wird, das sich eine Fluidierungsgeschwindigkeit von 0,02 bis 0,06 m/s einstellt.

4c. Einspeisung eines Gasgemisches I aus Wasserdampf und einem Inertgas, z. B. Stickstoff, oder eines Gasgemisches II aus Wasserdampf, einem Inertgas und Luft bei 300 bis 800 °C für die Dauer von 0,25 bis 6 h, wobei das Gasgemisch den Reaktor mit einer Fluidisierungsgeschwindigkeit von 0,02 bis 0,06 m/s durchströmt und die Gasgemische I und II eine Wasserdampfkonzentration von 10 bis 95 Vol.-% und im Falle des Gasgemisches II einen Sauerstoffgehalt von 0,01 bis 21 Vol.-% aufweisen.

4d. Unterbrechung der Dampfzugabe und Austreiben des Dampfes durch ein Inertgas, z.B. Stickstoff, und/oder ein Inertgas-Luft-Gemisch bei 300 bis 800 °C, wobei das Gas bzw. Gasgemisch den Reaktor mit einer Fluidisierungsgeschwindigkeit von 0,02 bis 0,06 m/s durchströmt und im Falle der Verwendung des Inertgas-Luft-Gemisches dieses einen Sauerstoffgehalt von 0,01 bis 21 Vol.-% aufweist.

4e. Abkühlung der getemperten Kieselsäure auf Raumtemperatur in einer trockenen Prozeßatmosphäre, wobei bei Verwendung eines Inertgas-Luft-Gemisches dieses einen Sauerstoffgehalt von 0,01 bis 21 Vol.-% aufweist.

Dabei wird nach dem Einfüllen der Kieselsäure in den Wirbelbettreaktor (Teilschritt 4a)) der Reaktor im Teilschritt 4b) auf eine Betriebstemperatur von 300 bis 800 °C, bevorzugt von 350 bis 690 °C und besonders bevorzugt von 400 bis 650 °C aufgeheizt. Während des Aufheizvorgangs wird der Reaktor von einem Inertgas, bevorzugt Stickstoff und/oder einem Gemisch aus einem Inertgas und trockener Luft so durchströmt, das sich eine Fluidisierungsgeschwindigkeit von 0,02 bis 0,06 m/s einstellt.

Nach Erreichen der Betriebstemperatur wird in Teilschritt 4c) ein Gasgemisch I aus Wasserdampf und einem Inertgas, bevorzugt Stickstoff, oder ein Gasgemisch II aus Wasserdampf, einem Inertgas und Luft für die Dauer von 0,25 bis 6 h, bevorzugt 0,5 bis 5 h, besonders bevorzugt 1 bis 4 h, ganz besonders bevorzugt 2 bis 4 h durch den Reaktor geleitet. Die Fluidisierungsgeschwindigkeit des Gasgemischs beträgt 0,02 bis 0,06 m/s. Die Gasgemische I und II weisen eine Wasserdampfkonzentration von 10 bis 95 Vol.-%, bevorzugt 40 bis 90 Gew.-% , ganz besonders bevorzugt 50 bis 90 Gew. % und im Falle des Gasgemisches II einen Sauerstoffgehalt von 0,01 bis 21 Vol.-% auf.

Die Techniken für eine optionale Vermahlung der erfindungsgemäßen Kieselsäuren sind dem Fachmann bekannt und kann z. B. in *Ullmann, 5. Auflage, B2, 5-20* nachgelesen werden. Bevorzugt werden für die Vermahlung der erfindungsgemäßen Kieselsäuren in Schritt 3a) und/oder in Schritt 5) Mahlsysteme (Mahlapparatur) umfassend oder bestehend aus Prallmühlen oder Strahlmühlen, bevorzugt Gegenstrahlmühlen eingesetzt. Besonders bevorzugt werden Fließbettgegenstrahlmühlen verwendet. Ganz besonders bevorzugt erfolgt die Vermahlung mittels eines Mahlsystems (Mahlapparatur), insbesondere bevorzugt eines Mahlsystems umfassend eine Strahlmühle, dadurch gekennzeichnet, dass die Mühle des Mahlsystems in der Mahlphase mit einem Betriebsmittel, ausgewählt aus der Gruppe, die aus Gas und/oder Dampf, bevorzugt Wasserdampf, und/oder einem Gas enthaltend Wasserdampf, besteht, betrieben wird und dass der Mahlraum in einer Aufheizphase, d. h. vor dem eigentlichen Betrieb mit dem Betriebsmittel, derart aufgeheizt wird, dass die Temperatur im Mahlraum und/oder am Mühlenausgang, höher liegt als der Taupunkt des Dampfes und/oder Betriebsmittel.

Insbesondere bevorzugt erfolgt die Vermahlung nach dem in der DE 10 2006 048 850.4 beschriebenen Verfahren, mit dem dort beschriebenen Mahlsystem (Mühle), wobei speziell bevorzugt Wasserdampf als Betriebsmittel verwendet wird. Die Mahlparameter werden bevorzugt so gewählt, dass das vermahlene Produkt im Bereich kleiner 1 μm der volumenbezogenen Partikelverteilung einen Anteil an feinen Partikeln von 5 bis 100 %, bevorzugt 10 bis 95%, besonders bevorzugt 15 bis 95 %, ganz besonders bevorzugt 20 bis 90 % und insbesondere bevorzugt von 40 bis 80 % und/oder einen $d_{9c}$-Wert der volumenbezogene Partikelverteilungskurve zwischen 0,01 und 10 μm aufweist.

In einer speziell bevorzugten Ausführungsform wird zur Vorbereitung der eigentlichen Vermahlung mit überhitztem Wasserdampf eine Fließbettgegenstrahlmühle gemäß Figur 7 mit integriertem dynamischen Windsichter gemäß Figuren 8a und 8b zunächst über die zwei Heizdüsen (5a) (wovon in Figur 7 nur eine dargestellt ist), welche mit heißer Druckluft, bevorzugt bei 10 bar und 160 °C, beaufschlagt werden, bis zu einer Mühlenaustrittstemperatur die höher liegt als der Taupunkt des Dampfes und/oder Betriebsmittel, bevorzugt ca. 105 °C, aufgeheizt.

Der Mühle ist zur Abscheidung des Mahlgutes eine Filteranlage nachgeschaltet (nicht in Figur 7 gezeigt), dessen Filtergehäuse im unteren Drittel indirekt über angebrachte Heizschlangen mittels Sattdampf, bevorzugt 6bar Sattdampf) ebenfalls zur Verhinderung von Kondensation beheizt wird. Alle Apparateoberflächen im Bereich der Mühle, des Abscheidefilters, sowie der Versorgungsleitungen für Dampf und heißer Druckluft sind besonders isoliert.

Nach Erreichen der gewünschten Aufheiztemperatur wird die Versorgung der Heizdüsen mit heißer Druckluft abgeschaltet und die Beaufschlagung der drei Mahldüsen mit überhitztem Wasserdampf, bevorzugt mit 38 bar(abs) bei

325 °C, gestartet.

Zum Schutz des im Abscheidefilter eingesetzten Filtermittels sowie zur Einstellung eines bestimmten Restwassergehaltes des Mahlgutes von vorzugsweise 2 bis 6 %, wird Wasser in der Startphase und während der Vermahlung in den Mahlraum der Mühle über eine mit Druckluft betriebene Zweistoffdüse in Abhängigkeit von der Mühlenaustrittstemperatur eingedüst.

Die Regelung der Aufgabemenge erfolgt in Abhängigkeit vom sich einstellenden Sichterstrom. Der Sichterstrom regelt die Aufgabemenge derart, dass ca. 70% des Nennstromes nicht überschritten werden können.

Als Eintragsorgan (4) fungiert dabei ein drehzahlgeregeltes Zellenrad, welches das Aufgabegut aus einem Vorlagebehälter über eine als barometrischer Abschluss dienende Taktschleuse in die unter Überdruck stehende Mahlkammer dosiert.

Die Zerkleinerung des Grobgutes erfolgt in den expandierenden Dampfstrahlen (Mahlgas). Gemeinsam mit dem entspannten Mahlgas steigen die Produktpartikel im Zentrum des Mühlenbehälters zum Sichtrad auf. Je nach eingestellter Sichterdrehzahl und Mahldampfmenge gelangen die Partikel, die eine ausreichende Feinheit aufweisen mit dem Mahldampf in den Feingutaustritt und von dort in das nachgeschaltete Abscheidesystem, während zu grobe Partikel zurück in die Mahlzone gelangen und einer nochmaligen Zerkleinerung unterworfen werden. Der Austrag des abgeschiedenen Feingutes aus dem Abscheidefilter in die nachfolgende Silierung und Abpackung geschieht mittels Zellenradschleuse.

Der an den Mahldüsen herrschende Mahldruck des Mahlgases, bzw. die daraus resultierenden Mahlgasmenge in Verbindung mit der Drehzahl des dynamischen Schaufelradsichters bestimmen die Feinheit der Kornverteilungsfunktion sowie die Oberkorngrenze.

Die erfindungsgemäßen Kieselsäuren können in Dichtungsmassen, insbesondere in Siliconkautschuk bzw. Silicondichtungsmassen und besonders bevorzugt in RTV-1K-Dichtungsmassen verwendet werden. Die Anwendung ist möglich in verschiedenen Vernetzungssystemen, z. B. acetoxy-vernetzend, alcoxy-vernetzend und oxim-vernetzend. Diese Systeme finden Anwendung z.B. in der Bauindustrie als Fugendichtungsmassen, in der Automobilindustrie als Kleb-und Dichtstoff und als Beschichtungsmassen für z.B. Textilgewebe.

Die Reaktionsbedingungen und die physikalisch/chemischen Daten der erfindungsgemäßen Fällungskieselsäuren werden mit den folgenden Methoden bestimmt:

## Bestimmung des Feststoffgehalts von Filterkuchen

Nach dieser Methode wird der Feststoffgehalt von Filterkuchen durch Entfernen der flüchtigen Anteile bei 105 °C bestimmt.

Dazu werden in eine trockene, tarierte Porzellanschale (Durchmesser 20 cm) 100,00 g des Filterkuchens eingewogen (Einwaage E). Gegebenenfalls wird der Filterkuchen mit einem Spatel zerkleinert, um lockere Brocken von maximal 1 $cm^3$ zu erhalten. Die Probe wird bei 105 ± 2 °C in einem Trockenschrank bis zur Gewichtskonstanz getrocknet. Anschließend wird die Probe in einem Exsikkatorschrank mit Kieselgel als Trocknungsmittel auf Raumtemperatur abgekühlt. Die Auswaage A wird gravimetrisch bestimmt.

Man bestimmt den Feststoffgehalt (FG) in % gemäß

$$FG = A / E * 100 \%,$$

mit A = Auswaage in g und E = Einwaage in g.

## Bestimmung des Feststoffgehalts von Fällsuspensionen

Der Feststoffgehalt der Fällsuspension wird gravimetrisch nach Filtration der Probe bestimmt.

100,0 ml der homogenisierten Fällsuspension ($V_{suspension}$) werden bei Raumtemperatur mit Hilfe eines Messzylinders abgemessen. Die Probe wird über einen Rundfilter (TYP 572, Fa. Schleicher & Schuell) in einer Porzellannutsche abgenutscht, aber nicht trockengesaugt, um Rissbildung des Filterkuchens zu verhindern. Anschließend wäscht man den Filterkuchen mit 100,0 ml destillierten Wasser. Der ausgewaschene Filterkuchen wird in eine tarierte Porzellanschale überführt und bei 105 ± 2 °C in einem Trockenschrank bis zur Gewichtskonstanz getrocknet. Nach Abkühlung auf Raumtemperatur wird das Gewicht der getrockneten Kieselsäure ($m_{Probe}$) ermittelt.

Der Feststoffgehalt bestimmt sich gemäß:

$$\text{Feststoffgehalt in g/l} = (m_{Probe} \text{ in g}) / (V_{Suspension} \text{ in l}).$$

## Bestimmung des Feststoffgehalts von Kieselsäurespeise

Die Kieselsäurespeise wird im IR-Trockner bis zur Gewichtskonstanz getrocknet. Der Trocknungsverlust besteht überwiegend aus Wasserfeuchtigkeit.

In eine tarierte Aluminiumschale werden 2,0 g Kieselsäurespeise eingefüllt und der Deckel der IR-Trockeneinheit (Fa. Mettler, Typ LP 16) geschlossen. Nach Drücken der Starttaste beginnt die Trocknung der Suspension bei 105 °C, die automatisch beendet wird, wenn die Gewichtsabnahme pro Zeiteinheit den Wert von 2 mg/(120 s) unterschreitet.

Die Gewichtsabnahme in % wird vom Gerät bei Anwahl des 0-100 %-Modus direkt angezeigt. Der Feststoffgehalt ergibt sich gemäß

Feststoffgehalt in % = 100 % - Gewichtsabnahme in %.

## Bestimmung des pH-Wertes

Die Bestimmung des pH-Wertes der Kieselsäure erfolgt als 5%ige wässrige Suspension bei Raumtemperatur in Anlehnung DIN EN ISO 787-9. Gegenüber den Vorgaben dieser Norm wurden die Einwaagen verändert (5,00 g Kieselsäure auf 100 ml entionisiertes Wasser).

## Bestimmung der elektrischen Leitfähigkeit

Die Bestimmung der elektrischen Leitfähigkeit von Kieselsäure wird als 4%ige wässrige Suspension bei Raumtemperatur in Anlehnung an DIN EN ISO 787-14 durchgeführt. Gegenüber den Vorgaben dieser Norm wurden die Einwaagen verändert (4,00 g Kieselsäure auf 100 ml entionisiertes Wasser).

## Bestimmung der Feuchte oder des Trockungsverlustes

Die Feuchte von Kieselsäure wird gemäß ISO 787-2 nach 2-stündiger Trocknung in einem Umlufttrockenschrank bei 105 °C bestimmt. Dieser Trocknungsverlust besteht überwiegend aus Wasserfeuchtigkeit.

## Bestimmung des Glühverlustes

Nach dieser Methode wird der Gewichtsverlust von Kieselsäure in Anlehnung an DIN EN ISO 3262-1 bei 1000 °C bestimmt. Bei dieser Temperatur entweicht physikalisch und chemisch gebundenes Wasser sowie andere flüchtige Bestandteile. Die Feuchte (TV) der untersuchten Probe wird nach der zuvor beschriebenen Methode "Bestimmung der Feuchte bzw. des Trockenverlusts" in Anlehnung an DIN EN ISO 787-2 ermittelt.

0.5 g der pulverförmigen, kugelförmigen oder granulären Kieselsäure werden auf 0.1 mg genau in einen vorgeglühten, tarierten Porzellantiegel eingewogen (Einwaage E). Die Probe wird 2 h bei 1000 ± 50 °C in einem Muffelofen erhitzt. Anschließend wird der Porzellantiegel in einem Exsikkatorschrank mit Kieselgel als Trocknungsmittel auf Raumtemperatur abgekühlt. Die Auswaage A wird gravimetrisch bestimmt.

Man erhält den Glühverlust (DIN) GV in % gemäß

$$GV = (1 - A / F) * 100.$$

F bedeutet die korrigierte Einwaage bezogen auf getrocknete Substanz in g und errechnet sich nach

$$F = E * (1 - TV / 100).$$

In den Berechnungen bedeuten A = Auswaage in g, E = Einwaage in g und TV = Trockenverlust in %.

**Bestimmung der BET-Oberfläche**

Die spezifische Stickstoff-Oberfläche (im folgenden BET-Oberfläche genannt) der pulverförmigen, kugelförmigen oder granulären Kieselsäure wird in Anlehnung an ISO 5794-1/Annex D mit dem Gerät TRISTAR 3000 ( Fa. Micromeritics) nach der Multipointbestimmung gemäß DIN-ISO 9277 ermittelt.

**Bestimmung der CTAB-Oberfläche**

Die Methode beruht auf der Adsorption von CTAB (N-Hexadecyl-N,N,N-trimethylammoniumbromid) an der "äußeren" Oberfläche der Kieselsäure in Anlehnung an die ASTM 3765, bzw. NFT 45-007 (Kapitel 5.12.1.3).

Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführten Operationen beträgt 23 - 25 °C um das Auskristallisieren von CTAB zu verhindern. Der Rücktitration liegt die folgende Reaktionsgleichung zu Grunde:

$$(C_{20}H_{37}O_4)SO_3Na + BrN(CH_3)_3(C_{16}H_{33}) \Rightarrow (C_{20}H_{37}O_4)SO_3N(CH_3)_3(C_{16}H_{33}) + NaBr$$

NDSS CTAB

Geräte

Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode, Fabrikat Mettler, Typ DP 550

Titrierbecher 100 ml aus Polypropylen

Titrierglasgefäß, 150 ml mit Deckel

Druckfiltrationsgerät, 100 ml Inhalt

Membranfilter aus Cellulosenitrat, Porengröße 0,1 µm, 47 mm Ø, z. B. Whatman (Best. Nr. 7181-004)

Reagenzien

Die Lösungen von CTAB ($C_{CTAB}$ = 0,015 mol/l in entionisiertem Wasser) und NDSS (Konzentration = 0,00423 mol/l in entionisiertem Wasser) werden gebrauchsfertig bezogen (Fa. Bernd Kraft GmbH, 47167 Duisburg: Bestell-Nr. 6056.4700 CTAB-Lösung der Konzentration 0,015 mol/l; Bestell-Nr. 6057.4700 NDSS-Lösung 0,00423 mol/l bei 25 °C aufbewahrt und innerhalb von einem Monat aufgebraucht.

Durchführung

1. Blindtitration

Der Verbrauch an NDSS-Lösung zur Titration von 5 ml CTAB-Lösung ist 1 x täglich vor jeder Meßreihe zu prüfen. Dazu wird die Phototrode vor Beginn der Titration auf 1000 ± 20 mV eingestellt (entsprechend einer Transparenz von 100 %).

Es werden genau 5.00 ml CTAB-Lösung in einen Titrierbecher pipettiert und man fügt 50,0 ml entionisiertes Wasser hinzu. Unter Rühren erfolgt die Titration mit NDSS-Lösung nach der dem Fachmann geläufigen Meßmethode mit dem Titroprozessor DL 55 bis zur max. Trübung der Lösung. Man bestimmt den Verbrauch $V_A$ an NDSS-Lösung in ml. Jede Titration ist als Dreifachbestimmung auszuführen.

**2. Adsorption**

10,0 g der pulverförmigen, kugelförmigen oder granulierten Kieselsäure mit einem Feuchtegehalt von 5 ± 2 % (gegebenenfalls wird der Feuchtegehalt durch Trocknen bei 105 °C im Trockenschrank oder gleichmäßiges Befeuchten

eingestellt) werden mit einer Mühle (Fa. Krups, Model KM 75, Artikel Nr. 2030-70) 30 Sekunden lang zerkleinert. Genau 500,0 mg der zerkleinerten Probe (Einwaage E) werden in ein 150 ml Titriergefäß mit Magnetrührstäbchen überführt und es werden genau 100,0 ml CTAB-Lösung ($T_1$) zudosiert. Das Titriergefäß wird mit einem Deckel verschlossen und mit einem Ultra Turrax T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0,1 mol/1) auf einen Wert von 9 ± 0,05 eingestellt.

Es erfolgt eine 4-minütige Beschallung der Suspension in dem Titriergefäß in einem Ultraschallbad (Fa. Bandelin, Sonorex RK 106 S, 35 kHz, 100 W Effektiv bzw. 200 W Spitzenleistung) bei 25 °C. Anschließend erfolgt eine umgehende Druckfiltration durch einen Membranfilter bei einem Stickstoffdruck von 1,2 bar. Der Vorlauf von 5 ml wird verworfen.

**3. Titration**

5,00 ml des übrigen Filtrats werden in einen 100 ml Titrierbecher pipettiert und mit entionisiertem Wasser auf 50,00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch $V_B$ an NDSS-Lösung in ml. Jede Titration ist als Dreifachbestimmung auszuführen.

Berechnung

$$CTAB(nicht\ feuchtekorrigiert) = \frac{V_A - V_B}{V_A} * \frac{C_{CTAB} * M_{CTAB} * T_1 * P}{E}$$

| | |
|---|---|
| $V_A$ = | Verbrauch an NDSS-Lösung in ml bei der Titration der Blindprobe |
| $V_B$ = | Verbrauch an NDSS-Lösung in ml bei Verwendung des Filtrats |
| $C_{CTAB}$ = | Konzentration der CTAB-Lösung in mol/l |
| $M_{CTAB}$ = | Molmasse von CTAB = 364,46 g/mol |
| $T_1$ = | Zugegebene Menge an CTAB-Lösung in 1 |
| P = | Platzbedarf von CTAB = 578,435 $m^2$/g |
| E = | Einwaage an Kieselsäure |

Die CTAB-Oberfläche wird auf die wasserfreie Kieselsäure bezogen, weshalb die folgende Korrektur durchgeführt wird.

$$CTAB = \frac{CTAB(nicht\ feuchtekorrigiert)\ in\ m^2/g * 100\,\%}{100\,\% - Feuchte\ in\ \%}$$

Die Feuchte der Kieselsäure wird gemäß der beschriebenen Methode "Bestimmung der Feuchte" ermittelt.

**Bestimmung der DBP-Aufnahme**

Die DBP-Aufnahme (DBP-Zahl), die ein Maß für die Saugfähigkeit der Fällungskieselsäure ist, wird in Anlehnung an die Norm DIN 53601 wie folgt bestimmt:

12,50 g pulverförmige oder kugelförmige Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer

279061) des Brabender-Absorptometer "E" gegeben (ohne Dämpfung des Ausgangsfilters des Drehmomentaufnehmers). Im Falle von Granulaten wird die Siebfraktion von 1 bis 3,15 mm (Edelstahlsiebe der Fa. Retsch) verwendet (durch sanftes Drücken der Granulate mit einem Kunststoffspatel durch das Sieb mit 3,15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0,6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so das der Verbrauch an DBP in ml abgelesen werden kann.

Die DBP-Aufnahme wird in g/(100 g) angegeben und anhand der folgenden Formel berechnet:

$$DBP = \frac{V * D * 100}{E} * \frac{g}{100\,g} + K$$

mit

DBP = DBP-Aufnahme in g/(100 g)

*V* = Verbrauch an DBP in ml

*D* = Dichte von DBP in g/ml (1,047 g/ml bei 20 °C)

*E* = Einwaage an Kieselsäure in g

*K* = Korrekturwert gemäß Feuchtekorrekturtabelle in g/100 g)

Die DBP-Aufnahme ist für die wasserfreie, getrocknete Kieselsäure definiert. Bei Verwendung von feuchten Fällungskieselsäuren ist der Korrekturwert K für die Berechnung der DBP-Aufnahme zu berücksichtigen. Dieser Wert kann anhand der folgenden Korrekturtabelle ermittelt werden, z. B. würde ein Wassergehalt der Kieselsäure von 5,8 % einen Zuschlag von 33 g/(100 g) für die DBP-Aufnahme bedeuten. Die Feuchte der Kieselsäure wird gemäß der Methode "Bestimmung der Feuchte bzw. des Trocknungsverlusts" ermittelt.

Feuchtekorrekturtabelle für Dibutylphthalataufnahme (wasserfrei)

| | % Feuchte | | | | |
|---|---|---|---|---|---|
| % Feuchte | ,0 | ,2 | ,4 | ,6 | ,8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**IR-Bestimmung**

Mittels IR-Spektroskopie können die unterschiedlichen Arten von SiOH-Gruppen (isoliert, verbrückt, + $H_2O$) ermittelt werden. Zur Bestimmung der Intensitäten der verschiedenen Silanolgruppen werden die Kieselsäuren als Pulverschichten vermessen. Die Extinktionswerte der unterschiedlichen Silanolgruppen werden durch den Extinktionswert der SiO-Kombinationsschwingungsbande bei 1870 $cm^{-1}$ dividiert (normiert).

Die IR-spektroskopische Bestimmung erfolgt mittels eines FT-IR-Spektrometers IFS 85 der Fa. Bruker. Für die Messung werden ein NaCl-Monokristallfenster (rund d=25 mm, h=5 mm) der Fa. K.Korth, Kiel, ein Distanzhalter 0,5 mm aus Teflon und eine Halterung für die Fenster verwendet. Der Distanzhalter wird auf ein sauberes und poliertes NaCl-Monokristallfenster gelegt. Das Probenmaterial wird zwischen den Distanzhalter aufgestäubt und mit einem weiteren sauberen und poliertem NaCl-Monokristallfenster abgedeckt, wobei keine Luftbläschen eingeschlossen sein dürfen. Die beiden NaCl-Monokristallfenster mit der Pulverschicht werden in die Probenhalterung eingespannt. Die Probenhalterung wird in den IR-Strahlengang gebracht und der Probenraum geschlossen. Der Probenraum wird vor der Messung mit von Wasserdampf und Kohlendioxid gereinigter Luft gespült. Im Justiermodus wird ein "Align" durchgeführt und die Messung gestartet.

Die Messung wird mit folgenden Parametern durchgeführt:

| | |
|---|---|
| Auflösung: | 2 $cm^{-1}$ |
| Scannergeschwindigkeit: | 6; 10,51 Hz |
| Messintervall: | 4500 $cm^{-1}$ bis 100 $cm^{-1}$ |
| Apodizierungsfunktion: | Triangular |
| Anzahl der Scans | 128 |

Das Spektrum wird im Wellenzahlenbereich von 4000 bis 1400 $cm^{-1}$ in kontinuierlichen Wellenzahlen ausgedruckt.

Das Extinktionsverhältnis $SiOH_{isoliert}$ wird wie folgt ermittelt (Figur 1):

Zunächst werden zwei Basislinien festgelegt. Dazu werden zwei Tangenten an die Absorptionskurve angelegt. Die erste Tangente (1. Basislinie) berührt die Absorptionskurve zum einen im Bereich von 4000 $cm^{-1}$ bis 3800 $cm^{-1}$ sowie zum anderen im Bereich von 3000 $cm^{-1}$ bis 2100 $cm^{-1}$. Dabei ist darauf zu achten, das die Tangente die Absorptionskurve weder im Bereich von 4000 $cm^{-1}$ bis 3800 $cm^{-1}$ noch im Bereich von 3000 $cm^{-1}$ bis 2100 $cm^{-1}$ schneidet. Die zweite Tangente (2. Basislinie) berührt die Absorptionskurve zum einen im Bereich von 2200 $cm^{-1}$ bis 2000 $cm^{-1}$ sowie zum anderen im Bereich von 1850 $cm^{-1}$ bis 1650 $cm^{-1}$. Dabei ist darauf zu achten, das die Tangente die Absorptionskurve weder im Bereich von 2200 $cm^{-1}$ bis 2000 $cm^{-1}$ noch im Bereich von 1850 $cm^{-1}$ bis 1650 $cm^{-1}$ schneidet.

Nach Festlegung der Basislinien wird vom Maximum der relevanten Banden (3750 und 1870 $cm^{-1}$) das Lot auf die jeweilige Basislinie gefällt und die jeweiligen Höhen vom Maximum bis zur Basislinie in mm ausgemessen. Es wird folgender Quotient gebildet:

$$\textit{Extinktionsverhältnis}\,(SiOH_{isoliert}) = \frac{\textit{Höhe vom Maximum zur Basislinie in mm bei } 3750\ cm^{-1}}{\textit{Höhe vom Maximum zur Basislinie in mm bei } 1870\ cm^{-1}}$$

Von jeder Probe werden sechs IR-Spektren aufgenommen, wobei jeweils mit neuem Probenmaterial gemessen wird. Jedes IR-Spektrum wird nach dem zuvor beschriebene Prozedere jeweils fünf mal ausgewertet. Das Exktinktionsverhältnis ($SiOH_{isoliert}$) wird schließlich als Mittelwert aller Auswertungen angegeben.

**Bestimmung des Kontaktwinkels**

Der Kontaktwinkel wird wie in W.T. Yen, R.S. Chahal, T. Salman, Can. Met. Quart., Vol. 12, Nr. 3, 1973 beschrieben bestimmt.

**Bestimmung der Silanolgruppendichte**

Zunächst wird die Feuchte der Kieselsäureprobe gemäß der "Bestimmung der Feuchte oder des Trocknungsverlustes" ermittelt. Danach werden 2 - 4 g der Probe (auf 1 mg genau zu bestimmen) in eine druckdichte Glasapparatur (Glaskolben mit Tropftrichter) mit angeschlossener Druckmessung überführt. Dort wird sie 1 h bei 120° im Vakuum (< 1 hPa) getrocknet. Bei Raumtemperatur werden dann aus einem Tropftrichter ca. 40 ml einer entgasten 2%igen Lösung von $LiAlH_4$ in Diglyme zugetropft. Evtl. wird weitere Lösung zugetropft, bis keine weitere Druckzunahme zu beobachten ist. Die Druckzunahme durch den bei der Reaktion des $LiAlH_4$ mit den Silanolgruppen der Kieselsäure entstehenden Wasserstoff wird über die Druckmessung (bei durch vor der Messung erfolgter Kalibrierung der Apparatur bekanntem Volumen) auf ≤ 1 hPa genau bestimmt. Aus der Druckzunahme kann über die Allgemeine Gasgleichung auf die Silanolgruppenkonzentration der Kieselsäure zurückgerechnet werden, wobei die Feuchte der Kieselsäure zu berücksichtigen ist. Der Einfluss des Dampfdrucks des Lösungsmittels ist dabei entsprechend zu korrigieren. Aus der Silanolgruppendichte errechnet sich wie folgt:

$$Silano\ lg\ ruppendich\ te = \frac{Silano\ lg\ ruppenkonz\ entration}{BET - Oberfläche}$$

**Bestimmung der Partikelgrößenverteilung mittels Laserbeugung**

Die Bestimmung der Partikelverteilung erfolgt nach dem Prinzip der Laserbeugung auf einem Laserdiffraktometer (Fa. Horiba, LA-920).

Zunächst wird die Kieselsäureprobe in 100 ml Wasser ohne Zusatz von Dispergieradditiven in einem 150 ml Becherglas (Durchmesser: 6 cm) so dispergiert, das eine Dispersion mit einem Gewichtsanteil von 1 Gew.-% $SiO_2$ entsteht. Diese Dispersion wird danach mit einem Ultraschallfinger (Dr. Hielscher UP400s, Sonotrode H7) über einen Zeitraum von 5 min intensiv (300 W, nicht gepulst) dispergiert. Dafür ist der Ultraschallfinger so anzubringen, das dessen unteres Ende bis ca. 1 cm über dem Boden des Becherglases eintaucht. Unmittelbar im Anschluss an die Dispergierung wird von einer Teilprobe der mit Ultraschall beanspruchten Dispersion mit dem Laserdiffraktometer (Horiba LA-920) die Partikelgrößenverteilung bestimmt. Für die Auswertung mit der mitgelieferten Standardsoftware des Horiba LA-920 ist ein Brechungsindex von 1,09 zu wählen.

Alle Messungen erfolgen bei Raumtemperatur. Die Partikelgrößenverteilung sowie die relevanten Größen wie z. B. die Partikelgröße $d_{90}$ werden vom Gerät automatisch berechnet und grafisch dargestellt. Es sind die Hinweise in der Bedienungsanleitung zu beachten.

**Bestimmung der modifizierten Stampfdichte**

Bei der "herkömmlichen" Stampfdichtebestimmung nach DIN EN ISO 787-11 kann das Messergebnis dadurch verfälscht werden, das die Kieselsäure bereits eine Vorverdichtung z. B. beim Abpacken erfahren hat. Um dies auszuschließen, wird für die erfindungsgemäßen Kieselsäuren eine "modifizierte Stampfdichte" bestimmt.

Eine mit einem Rundfilter (z.B. Typ 598, Fa. Schleicher + Schüll) versehene Porzellannutsche (Nenngröße 110, Durchmesser = 12 cm, Höhe = 5,5 cm) wird bis ca. 1 cm unter den oberen Rand locker mit Kieselsäure gefüllt und mit elastischer Folie (Parafilm®) abgedeckt. Die Form und Ausmaße der elastischen Folie sind so zu wählen, das diese möglichst vollständig mit dem Rand der Porzellannutsche abschließt. Die Nutsche wird auf eine Saugflasche gesetzt und anschließend wird für die Dauer von 5 min ein Vakuum von -0,7 bar angelegt. Dabei wird die Kieselsäure durch die angesaugte Folie gleichmäßig kompaktiert. Danach wird vorsichtig belüftet und die entstandene Kieselsäureplatte aus der Nutsche durch Stürzen in eine Porzellanschale entfernt.

Das leicht vorzerkleinerte Material wird über eine Zentrifugalmühle (ZM 1, Fa. Retsch, 0,5 mm Siebeinsatz, Geschwindigkeitsstufe 1, ohne Zyklon, ohne inneren Trichtereinsatz) mit innerer Auffangschale gleichmäßig (die Kieselsäure (Edukt) wird langsam - Spatel für Spatel - in die Mühlenaufgabe gegeben, die innere Produkt-Auffangschale soll nie ganz voll werden) redispergiert (im Sinne eines Kieselsäure/Luft Aerosols). Dabei darf die Stromaufnahme der Mühle den Wert von 3 Ampere nicht überschreiten. Bei diesem Vorgang handelt es sich weniger um eine klassische Vermahlung, als um ein definiertes Auflockern der Kieselsäurestruktur (von z. B. luftstrahlvermahlenen Kieselsäuren), da der Energieeintrag hier wesentlich schwächer ist als bei einer Strahlvermahlung.

5 g des so erhaltenen Materials werden in den 250 ml-Messzylinder des Stampfvolumeters (Typ STAV 2003, Fa. Engelsmann) auf 0,1 g genau eingewogen. In Anlehnung an DIN ISO 787-11 wird nach 1250maligem Aufstampfen das resultierende Volumen der Kieselsäure in ml an der Skala abgelesen.

$$\textit{Modifizierte Stampfdichte in } [g/l] = \frac{5\,g}{\textit{Stampfvolumen in } [ml]} \times \frac{1000\,ml}{1\,l}$$

Die folgenden Beispiele sollen die Erfindung näher erläutern, ohne ihren Umfang zu beschränken.

Das an verschiedenen Stellen in der nachfolgenden Vorschriften der Beispiele eingesetzte Wasserglas und die Schwefelsäure wird wie folgt charakterisiert:

Wasserglas: Dichte 1,348 kg/l, 27,0 Gew.-% $SiO_2$, 8,05 Gew.-% $Na_2O$

Schwefelsäure: Dichte 1,83 kg/l, 94 Gew.-%

**Beispiel 1**

In einem 2 $m^3$ Fällbehälter (Durchmesser 160 cm) mit Schrägboden, MIG-Schrägblattrührsystem und Ekato-Fluid-Scherturbine werden 1679 1 entionisiertes Wasser vorgelegt und auf 92 °C aufgeheizt. Nach Erreichen der Temperatur werden für die Dauer von 100 min Wasserglas mit einer Dosierrate von 3,93 kg/min und Schwefelsäure mit einer Dosierrate von 0,526 kg/min unter Rühren zudosiert. Die Dosierrate der Schwefelsäure ist evtl. so zu korrigieren, das während der gesamten Fälldauer ein pH-Wert von 8,5 eingehalten wird. Danach wird die Wasserglasdosierung unter Beibehaltung der Temperatur abgeschaltet und bei gleicher Dosierrate der Schwefelsäure wird die Fällsuspension auf pH 3 angesäuert. Die Fällsuspension weist einen Feststoffgehalt von 54 g/l auf.

Die erhaltene Suspension wird mit einer Membranfilterpresse filtriert und der Filterkuchen mit entionisiertem Wasser gewaschen, bis im Waschwasser eine Leitfähigkeit von < 1 mS/cm festzustellen ist. Der Filterkuchen liegt dann mit einem Feststoffgehalt von < 20 % vor.

Vor der Trocknung mittels Sprühtrockner wird der Filterkuchen mit entionisiertem Wasser auf einen Feststoffgehalt von 8 - 13 % redispergiert, wobei darauf zu achten ist, das er dabei keinen starken Scherkräften ausgesetzt wird. Die Eindosierung des verflüssigten Filterkuchens in den Sprühtrockner erfolgt so, das die am Trockneraustritt gemessene Temperatur ca. 150 °C beträgt.

Anschließend wird das Material im Wirbelbettreaktor (Wirbelbetthöhe des expandierten Wirbelbettes ca. 1,5 m, Wirbelbettdurchmesser ca. 0,5 m) behandelt. Dazu sind die folgenden Bedingungen einzuhalten:

Zunächst werden 30 kg des sprühgetrockneten Pulver in den Wirbelbettreaktor mit Fluidisierungsboden gefüllt. Der Fluidisierungsboden wird von einem Gasgemisch aus trockenem Stickstoff und trockener Luft durchströmt. Diese beiden Gase werden vor dem Eintritt in den Reaktor so dosiert, das ein resultierender Sauerstoffgehalt von 6 Vol.-% nicht überschritten wird und das sich eine Fluidisierungsgeschwindigkeit im Reaktor von 0,05 m/s ergibt. Der Reaktor wird nun von Raumtemperatur auf 450 °C erhitzt. Die Gasflüsse des Fluidisierungsgases sind in der Aufheizphase so zu regeln, das die Fluidisierungsgeschwindigkeit im Reaktor von 0,05 m/s konstant bleibt.

Nach dem Erreichen von 450 °C wird für die Dauer von 3 h ein vorgeheiztes Gasgemisch von Wasserdampf, Stickstoff und Luft in den Reaktor eingespeist. Das Mischen der drei Komponenten erfolgt derart, das sich eine Wasserdampfkonzentration von 50 % und ein Sauerstoffgehalt von 3 % einstellt. Stickstoff- und Luftmengen werden so angepasst, das wieder eine Fluidgasgeschwindigkeit von 0,05 m/s entsteht.

Danach wird die Dampfzugabe unterbrochen. Stickstoff und Luftmengen werden so adaptiert, das wieder eine Fluidisierungsgeschwindigkeit von 0,05 m/s und ein Sauerstoffgehalt von ca. 6% resultiert.

Nachdem nach Unterbrechung der Dampfzufuhr mindestens das fünffache Volumen an trockenem Prozessgas durch den Wirbelbettreaktor geleitet wurde, wird das Produkt in einer trockenen Prozessgasathmosphäre auf Raumtemperatur abgekühlt. Das Abkühlen findet unter Fluidisierung in einem Stickstoff-Luft-Gemisch statt, in dem der Sauerstoffgehalt ca. 6 % beträgt. In der Abkühlphase ist besonders darauf zu achten, das jetzt kein Wasserdampf mehr anwesend ist.

Nach der Oberflächenbehandlung im Wirbelbett wird das Material auf einer Fließbettgegenstrahlmühle AFG 50, der Firma Alpine vermahlen. Die chemisch-physikalischen Daten des Beispiels 1 sind in Tabelle 1 aufgelistet, ein IR-Spektrum ist in Figur 2 abgebildet.

**Beispiel 2**

In einem 2 $m^3$ Fällbehälter (Durchmesser 160 cm) mit Schrägboden, MIG-Schrägblattrührsystem und Ekato-Fluid-Scherturbine werden 1680 1 entionisiertes Wasser vorgelegt und auf 92 °C aufgeheizt. Nach Erreichen der Temperatur werden für die Dauer von 100 min Wasserglas mit einer Dosierrate von 3,93 kg/min und Schwefelsäure mit einer

Dosierrate von 0,526 kg/min unter Rühren zudosiert. Die Dosierrate der Schwefelsäure ist evtl. so zu korrigieren, dass während der gesamten Fälldauer ein pH-Wert von 8,5 eingehalten wird. Danach wird die Wasserglasdosierung abgeschaltet und bei gleicher Dosierrate der Schwefelsäure und weiterhin 92 °C die Fällsuspension auf pH 3 angesäuert. Die Fällsuspension weist dann einen Feststoffgehalt von 54 g/l auf.

Die erhaltene Suspension wird mit einer Membranfilterpresse filtriert und der Filterkuchen mit entionisiertem Wasser gewaschen, bis im Waschwasser eine Leitfähigkeit von < 1 mS/cm festzustellen ist. Der Filterkuchen liegt dann mit einem Feststoffgehalt von < 20 % vor.

Vor der Trocknung mittels Sprühtrockner wird der Filterkuchen mit entionisiertem Wasser auf einen Feststoffgehalt von 8 - 13 % redispergiert, wobei darauf zu achten ist, dass er dabei keinen starken Scherkräften ausgesetzt wird. Die Eindosierung des verflüssigten Filterkuchens in den Sprühtrockner erfolgt so, dass die am Trockneraustritt gemessene Temperatur ca. 150 °C beträgt.

Das sprühgetrocknete Material wird über eine mechanische Schlägermühle auf eine mittlere Partikelgröße von 10-12 $\mu$m vorvermahlen. Nach dieser Vorvermahlung wird das Material auf einer wasserdampfbetriebenen Fließbettgegenstrahlmühle bei 38 bar Überdruck feinstvermahlen. Details zum verwendeten Mahlsystem (Mühle) und zum verwendeten Mahlverfahren können der DE 10 2006 048 850.4 sowie der nachfolgenden Beschreibung entnommen werden.

Zur Vorbereitung der eigentlichen Vermahlung mit überhitztem Wasserdampf eine Fließbettgegenstrahlmühle gemäß Figur 7 mit integriertem dynamischen Windsichter gemäß Figuren 8a und 8b zunächst über die zwei Heizdüsen 5a (wovon in Figur 7 nur eine dargestellt ist), welche mit 10 bar und 160 °C heißer Druckluft beaufschlagt werden, bis zu einer Mühlenaustrittstemperatur von ca. 105 °C aufgeheizt.

Der Mühle ist zur Abscheidung des Mahlgutes eine Filteranlage nachgeschaltet (nicht in Figur 7 gezeigt), dessen Filtergehäuse im unteren Drittel indirekt über angebrachte Heizschlangen mittels 6 bar Sattdampf ebenfalls zur Verhinderung von Kondensation beheizt wird. Alle Apparateoberflächen im Bereich der Mühle, des Abscheidefilters, sowie der Versorgungsleitungen für Dampf und heißer Druckluft sind besonders isoliert.

Nach Erreichen der Aufheiztemperatur wird die Versorgung der Heizdüsen mit heißer Druckluft abgeschaltet und die Beaufschlagung der drei Mahldüsen mit überhitztem Wasserdampf (37,9 bar(abs), 325 °C), als Mahlmedium, gestartet.

Zum Schutz des im Abscheidefilter eingesetzten Filtermittels sowie zur Einstellung eines bestimmten Restwassergehaltes des Mahlgutes (siehe Tabelle 1), wird Wasser in der Startphase und während der Vermahlung in den Mahlraum der Mühle über eine mit Druckluft betriebene Zweistoffdüse in Abhängigkeit von der Mühlenaustrittstemperatur eingedüst.

Folgende Konfiguration und Betriebsparameter der Mühle werden verwendet: Düsendurchmesser der Mahldüsen = 2,5 mm, Düsentyp = Laval, Anzahl der Düsen = 3 Stück; Mühleninnendruck = 1,306 bar (abs.), Eintrittsdruck des Mahlmediums = 37,9 bar (abs.), Eintrittstemperatur des Mahlmediums = 325 °C, Mühlen-austrittstemperatur des Mahlmediums = 149,8°C, Sichterdrehzahl = 3500 $min^{-1}$, Sichterstrom = 54,5 A%, Austrittsstutzendurchmesser (Tauchrohrdurchmesser) = 100 mm.

Mit der Produktaufgabe wird begonnen, wenn die o. g. Prozessparameter konstant sind. Die Regelung der Aufgabemenge erfolgt in Abhängigkeit vom sich einstellenden Sichterstrom. Der Sichterstrom regelt die Aufgabemenge derart, dass ca. 70% des Nennstromes nicht überschritten werden können.

Als Eintragsorgan (4) fungiert dabei ein drehzahlgeregeltes Zellenrad, welches das Aufgabegut aus einem Vorlagebehälter über eine als barometrischer Abschluss dienende Taktschleuse in die unter Überdruck stehende Mahlkammer dosiert.

Die Zerkleinerung des Grobgutes erfolgt in den expandierenden Dampfstrahlen (Mahlgas). Gemeinsam mit dem entspannten Mahlgas steigen die Produktpartikel im Zentrum des Mühlenbehälters zum Sichtrad auf. Je nach eingestellter Sichterdrehzahl und Mahldampfmenge gelangen die Partikel, die eine ausreichende Feinheit aufweisen mit dem Mahldampf in den Feingutaustritt und von dort in das nachgeschaltete Abscheidesystem, während zu grobe Partikel zurück in die Mahlzone gelangen und einer nochmaligen Zerkleinerung unterworfen werden. Der Austrag des abgeschiedenen Feingutes aus dem Abscheidefilter in die nachfolgende Silierung und Abpackung geschieht mittels Zellenradschleuse.

Der an den Mahldüsen herrschende Mahldruck des Mahlgases, bzw. die daraus resultierenden Mahlgasmenge in Verbindung mit der Drehzahl des dynamischen Schaufelradsichters bestimmen die Feinheit der Kornverteilungsfunktion sowie die Oberkorngrenze.

Das Material wird auf die in Tabelle 1 durch den $d_{90}$-Wert und den Anteil an Partikeln < 1 $\mu$m definierte Partikelgröße vermahlen.

Anschließend wird das Material im Wirbelbettreaktor behandelt. Dazu sind die folgenden Bedingungen einzuhalten:

Zunächst werden 5 kg des Pulver in den Wirbelbettreaktor mit Fluidisierungsboden gefüllt. Der Fluidisierungsboden wird von einem Gasgemisch aus trockenem Stickstoff und trockener Luft durchströmt. Diese beiden Gase werden vor dem Eintritt in den Reaktor so dosiert, dass ein resultierender Sauerstoffgehalt von 6 Vol.-% nicht überschritten wird

und dass sich eine Fluidisierungsgeschwindigkeit im Reaktor von 0,05 m/s ergibt. Der Reaktor wird nun von Raumtemperatur auf 600 °C erhitzt. Die Gasflüsse des Fluidisierungsgases sind in der Aufheizphase so zu regeln, dass die Fluidisierungsgeschwindigkeit im Reaktor von 0,05 m/s konstant bleibt.

Nach dem Erreichen von 600 °C wird für die Dauer von 2 h ein vorgeheiztes Gasgemisch von Wasserdampf und Stickstoff in den Reaktor eingespeist. Das Mischen der beiden Komponenten erfolgt derart, das sich eine Wasserdampfkonzentration von 90 % und ein Stickstoffgehalt von 10 % einstellt. Die Gasmengen werden so angepaßt, dass wieder eine Fluidgasgeschwindigkeit von 0,05 m/s entsteht.

Danach wird die Dampfzugabe unterbrochen und 30 Minuten lang reiner Stickstoff bei 600 °C durch den Wirbelbettreaktor geleitet.

Dann wird das Material im trockenen Stickstoffstrom auf Raumtemperatur abgekühlt und aus dem Reaktor ausgetragen. In der Abkühlphase ist besonders darauf zu achten, dass jetzt kein Wasserdampf mehr anwesend ist.

Die chemisch-physikalischen Daten des Beispiels 2 sind in Tabelle 1 aufgelistet, ein IR-Spektrum ist in Abbildung 6 abgebildet.

**Vergleichsbeispiele 1 - 2**

Folgende kommerziell erhältlichen Kieselsäuren wurden analytisch untersucht (s. Tabelle 1) und in Beispiel 4 in Dichtungsmassen eingearbeitet:

Vergleichsbeispiel 1: Siloa™ 72 X (Fa. Rhodia AG)

Vergleichsbeispiel 2: Ultrasil® VN 3 (Degussa AG)

Tabelle 1:

| **Produkt** | | **Beispiel 1** | **Beispiel 2** | **Vergleichsbeispiel 1** | **Vergleichsbeispiel 2** |
|---|---|---|---|---|---|
| BET | $m^2/g$ | 166 | 142 | 167 | 170 |
| CTAB | $m^2/g$ | 172 | 157 | 156 | 153 |
| DBP | g/100g | 283 | 295 | 261 | 222 |
| $_{P}$H-Wert | - | 7,5 | 6,0 | 5,8 | 6,4 |
| Trocknungsverlust | % | 1,6 | 0,5 | 2,4 | 5,5 |
| Glühverlust | % | 1,6 | 0,9 | 2,5 | 4,2 |
| Extinktionsverhältnis $SiOH_{isoliert}$ | | 2,43 | 3,17 | 0,80[2)] | 0,33 |
| Silanolgruppendichte | $SiOH/nm^2$ | 2,573 | 1,988 | 3,823 | 3,822 |
| Modifizierte Stampfdichte | g/l | 46 | 21 | 72 | 97 |
| Anteil feiner Partikel < 1 µm [1)] | % | 24,8 | 66,7 | 0,0 | 0,0 |
| Art der Partikelverteilung | | Bimodal | Bimodal | Monomodal | Monomodal |
| $d_{90}$-Wert der volumenbezogenen Partikelverteilung | µm | 6,03 | 5,87 | 14,0 | 24,17 |
| Verhalten gegenüber Wasser | | Hydrophil | Hydrophil | Hydrophil | Hydrophil |
| 1) bei 5 min Ultraschall mit 300 Watt<br>2) IR-Spektrum siehe Figur 3 | | | | | |

**Beispiel 3: Anwendungstechnische Prüfungen**

**3.1 Herstellung von acetatvernetzenden RTV-1K-Silicondichtungsmassen mit Fällungskieselsäuren**

Die für die Herstellung der nachfolgenden Formulierung benötigten Mengen sind in Tabelle 2 angegeben. Während der Herstellung ist mittels Leitungswasser so zu kühlen, das sich die Formulierung nicht wesentlich über Raumtemperatur erwärmt. Die Herstellung erfolgt bei Raumtemperatur und bei einer relativen Luftfeuchte von 40 bis 60 %.

In einen Planeten-Dissolver (Fa. H. Linden, Typ LPMD 2SP) ausgestattet mit einem 2 1-Rührgefäß mit Doppelmantel, Kühlwasseranschluß und unabhängig voneinander steuerbarem Planeten- und Dissolverantrieb, werden Siliconpolymer, Weichmacher (Siliconöl) und Vernetzer eingewogen und 1 min bei einer Geschwindigkeit von 50 $min^{-1}$ (Planetenantrieb) und 500 $min^{-1}$ (Dissolverantrieb) homogenisiert. Anschließend wird der Katalysator zugegeben und 15 min unter $N_2$-Atmosphäre bei gleichbleibenden Geschwindigkeiten des Planeten- und Dissolverantriebs homogenisiert. Danach werden der Stabilisator und die Kieselsäure ebenfalls bei gleichbleibenden Geschwindigkeiten eingearbeitet. Sobald die Kieselsäure vollständig benetzt ist, wird ein Vakuum von ca. 200 mbar angelegt und 10 min bei 100 $min^{-1}$ des Planetenrührwerks und 2000 $min^{-1}$ des Dissolvers dispergiert.

Sofort nach Beendigung der Dispergierung wird das Rührgefäß mit Stickstoff belüftet. Mit einer Faßpresse wird die Dichtungsmasse möglichst schnell in Aluminiumtuben (Kartuschen) abgefüllt.

**3.2 Herstellung von Vulkanisaten aus RTV-1K-**

Um die anwendungstechnischen Eigenschaften von RTV-1K-Silicondichtungsmassen zu prüfen, in denen die erfindungsgemäßen Kieselsäuren eingesetzt werden, müssen aus den zuvor hergestellten Dichtungsmassen Vulkanisate erzeugt werden. Diese Vulkanisate werden zu Prüfkörpern verarbeitet. Dazu wird zunächst die Silicondichtungsmasse in ausreichender Menge auf einer glatten Auflageplatte aufgebracht und mit einem Rakel (Spalthöhe: 2 mm) zu einem Streifen vom 2 mm Höhe, ca. 80 mm Breite und einer Länge von ca. 300 mm glatt gestrichen. Dabei ist darauf zu achten, dass sich keine Luftblasen bilden. Aus diesen Siliconstreifen werden dann die für die jeweilige Prüfung notwendigen Formkörper ausgestanzt. Die Auflageplatte sollte aus Polypropylen, Polyethylen, Teflon oder einem anderen Kunststoff bestehen, von dem sich die vulkanisierte Dichtungsmasse leicht ablösen lässt.

Die Siliconstreifen werden 7 Tage zum vollständigen Aushärten und anschließend im Normklima (23 °C, 50 % rel. Feuchte) für mindestens 2 Tage gelagert.

Tabelle 2: Formulierung zur Herstellung einer Einkomponenten Raumtemperatur-vernetzenden (RTV-1K) Silicondichtungsmasse (acetoxy-System)

| Formulierungsbestandteil [Allgemeiner Name] | Chemische Bezeichnung | Produktname und Hersteller | Vernetzer 42 g Füllgrad 12 % $SiO_2$ | | Vernetzer 30 g Füllgrad 12 % $SiO_2$ | |
|---|---|---|---|---|---|---|
| | | | Ein-waage [g] | Anteil [%] | Ein-waage | Anteil |
| **Siliconpolymer** OH-terminiertes Siliconpolymer (Viskosität = 50.000 mPa*s) | α,ω-Hydroxydimethylsiloxy-polydimethylsiloxan | **Silopren® E 50** GE Bayer Silicones GmbH & Co. KG | 468,00 | 58,6 | 468,00 | 59,5 |
| **Weichmacher** nicht-funktionelles Poly-dimethylsiloxan (Siliconöl, Viskosität = 1.000 mPa*s) | α,ω-Trimethylsiloxy-polydimethylsiloxan | **Oil M 1000** GE Bayer Silicones GmbH & Co. KG | 184,50 | 23,1 | 184,50 | 23,5 |
| **Aktiver Füllstoff** Kieselsäure | Fällungskieselsäure | **Kieselsäure nach Beispiel 1 oder 2 bzw. Vergleichsbeispiel 1 oder 2** | 95,79 | 11,999 | 95,79 | 12,2 |
| **Vernetzer** | Ethyltriacetoxysilan | **Ethyltriacetoxysilan** ABCR GmbH & Co.KG | 42,00 | 5,3 | 30,00 | 3,8 |
| **Stabilisator** | | **TP 3556** GE Bayer Silicones GmbH & Co. KG, | 8,00 | 1,0 | 8,00 | 1,0 |
| **Katalysator** | Dibutylzinndiacetat | **TEGOKAT® 233** Goldschmidt TIB GmbH | 7 Tr. 0,01 g | 0,001 | 7 Tr. 0,01 g | 0,001 |
| **Gesamtmengen** | | | **798,3** | **100** | **786,3** | **100** |

Tr. = Tropfen

### 3.3 Bestimmung der rheologischen Eigenschaften und der Lagerstabilität von RTV-1K-Dichtungsmassen

Die gemäß Beispiel 3, Punkt 1, "Herstellung von acetatvernetzenden RTV-1K-Silicondichtungsmassen mit Fällungskieselsäuren" hergestellten Dichtungsmassen werden vor der Prüfung mindestens 24 h im Klimaraum bei 23 °C / 50 % rel. Feuchte gelagert.

Zur Prüfung der Lagerstabilität der Dichtmassen werden zwei Tuben für 35 Tage im Klimaraum bei 23 °C / 50 % rel. Feuchte gelagert und jeweils nach 1, 7, 14, 21, 28 und 35 Tagen Lagerzeit geprüft. Zudem werden zwei weitere Tuben in einem Umluftofen bei 50 °C für 35 Tage gelagert und ebenfalls nach 1, 7, 14, 21, 28 und 35 Tagen Lagerzeit geprüft.

Die Bestimmung der rheologischen Eigenschaften erfolgt mittels eines Rheometers RheoStress 1 der Fa. Haake (Steuerung über PC durch das Programm RheoWin Pro). Die Bedienung des Geräts und der Software ist in der Betriebsanleitung von Fa. Haake ausführlich beschrieben. Für die Messung ist ein Stempel mit einem Durchmesser von 35 mm und der Messplattenaufsatz MPC 35 zu verwenden. Die Messung wird unter folgenden Bedingungen durchgeführt:

| | |
|---|---|
| Spaltabstand zwischen Stempel und Messplattenaufsatz: | 0,5 mm |
| Messtemperatur: | 23 °C |
| Messbereich (Scherrate) : | 0 - 10 1/s |
| Anzahl der Messpunkte: | 400 |

Die Messpunkte werden in einem Diagramm dargestellt, das auf der x-Achse die Scherrate Y und auf der y-Achse die Schubspannung τ darstellt. Bei der Scherrate = 10 1/s wird die Schubspannung abgelesen und daraus die Viskosität η bei 10 1/s gemäß n = τ / γ errechnet. Gemessen werden zwei Tuben, je Tube werden mindestens drei Messungen durchgeführt. Aus den sechs Einzelergebnissen werden der höchste und niedrigste Wert gestrichen. Aus den verbleibenden vier Ergebnissen wird der Mittelwert berechnet.

Für die Ermittlung der Fließgrenze wird das Modell nach Casson verwendet. Als Datenbasis zur Berechnung der Fließkurve nach Casson wird der Bereich von 0,2 bis 2 1/s aus dem Scherrate-Schubspannung-Diagramm zugrunde gelegt. Folgende Abhängigkeit wird definiert:

$$\tau = f\left(\dot{\gamma}\right)$$

Der Wert auf der y-Achse, bei dem diese die nach Casson errechneten Fließkurve schneidet, wird als Fließgrenze nach Casson angegeben.

Die Ermittlung sowohl der Viskosität bei 10 1/s als auch der Fließgrenze nach Casson erfolgt automatisch unter den o. a. Bedingungen mittels der Software RheoWin Pro.

### 3.4 Bestimmung der Zugfestigkeit und der Bruchdehnung von vulkanisiertem Siliconkautschuk

Diese Bestimmung erfolgt in Anlehnung an DIN 53504 und dient zur Ermittlung der Zugfestigkeit und der Bruchdehnung von Probekörpern bestimmter Form aus Elastomeren bei Dehnung der Probekörper mit konstanter Geschwindigkeit bis zum Reißen. Dabei sind die Zugfestigkeit und die Bruchdehnung wie folgt definiert:

Die Zugfestigkeit δmax ist der Quotient aus der gemessenen Höchstkraft Fmax und dem Anfangsquerschnitt A 0 des Probekörpers.

Die Bruchdehnung εR ist der Quotient aus der im Augenblick des Reißens gemessenen Änderung L Δ der Meßlänge und der ursprünglichen Meßlänge L 0 des Probekörpers.

Die Messung wird auf einer Zugprüfmaschine (Fa. Zwick/Roell, Typ Z010) durchgeführt, wobei darauf zu achten ist, das die vorgewählte Höchstkraft variabel ist, das die Einspannvorrichtung den Prüfkörper auch bei hoher Streckung ohne mechanische Beschädigung festhält und den Steg des Prüfkörpers auch bei hoher Streckung ohne mechanische Beschädigung auf der eingestellten Messlänge L 0 hält und das der Federdruck an den Klemmbacken des Feindehnungsmessers einstellbar ist.

Es sind die in Figur 4 beschriebenen Normstäbe S 1 zu verwenden.

Aus den vulkanisierten 2 mm starken Streifen werden mit einem Stanzeisen für Normstäbe S 1 die entsprechenden Prüfkörper ausgestanzt und mindestens 24 h unter Normklima (23 °C, 50 % rel. Feuchte) bis zur Prüfung gelagert.

Es sind 4-6 Probekörper bei einer Temperatur von (23 ± 2) °C zu prüfen. Vor dem Zugversuch ist die Dicke d und die Breite b der Probekörper zu messen. Beim Einspannen sind die Normstäbe mittig zwischen die beiden Einspannbacken einzuspannen. Der Abstand zwischen den Einspannbacken beträgt L = 50 mm. Der Feindehnungsmesser ist auf die Meßlänge L 0 = 25 mm einzustellen und mittig zwischen den Einspannbacken zu fixieren. Die Anzeigen sind auf Null zu stellen. Die Vorschubgeschwindigkeit der ziehenden Klemme beträgt v = 500 mm/min. Es wird die Kraft Fmax und die Längenänderung L Δ beim Reißen festgestellt. Daraus werden Zugfestigkeit und Bruchdehnung wie folgt errechnet und als Mittelwert der Einzelmessungen angegeben:

$$\text{Zugfestigkeit } \delta_{max} = \frac{F_{max}}{A_0}$$

mit

$\delta_{max}$ = Zugfestigkeit in [MPa] oder in [N/mm$^2$]

$F_{max}$ = Höchstkraft in [N]

$A_0$ = Anfangsquerschnitt (a * b) in [mm$^2$]

$$\text{Bruchdehnung } \varepsilon_R = \frac{L_\Delta}{L_0} * 100$$

mit

$\varepsilon_R$ = Bruchdehnung in [%]

$L_\Delta$ = Längenänderung in [mm]

$L_0$ = Anfangslänge in [mm]

**3.5 Bestimmung des Weiterreißwiderstandes von vulkanisiertem Siliconkautschuk**

Diese Bestimmung erfolgt in Anlehnung an ASTM D 624 B. Der Weiterreißversuch an Elastomeren dient zur Ermittlung des Widerstandes, den eine eingeschnittene Probe dem Weiterreißen entgegensetzt.

Der Weiterreißwiderstand eines Elastomers ist abhängig von dessen Formulierungsbestandteilen und dessen Verarbeitung, der Vulkanisation und der Prüfgeschwindigkeit. Geprüft wird der Einfluss des Verstärkerfüllstoffs auf den Weiterreißwiderstand der Vulkanisate. Die Messung wird auf einer Zugprüfmaschine (Fa. Zwick/ Roell, Typ Z010) durchgeführt, wobei darauf zu achten ist, das die vorgewählte Höchstkraft variabel ist und das die Einspannungsvorrichtung den Prüfkörper auch bei hoher Dehnung ohne mechanische Beschädigung festhält.

Aus den vulkanisierten 2 mm starken Siliconstreifen werden Prüfkörper (Figur 5) mit einem ASTM D 624 B entsprechenden Stanzeisen geschnitten und mindestens 24 h unter Normklima (23 °C, 50 % rel. Feuchte) bis zur Prüfung gelagert.

Das Stanzeisen verfügt am Scheitelpunkt des Innenradius über ein Messer, mit dem beim Ausstanzen an dieser Stelle ein Schlitz 0,5 mm ± 0,05 mm tief eingeschnitten wird.

Es sind 4-6 Probekörper bei einer Temperatur von (23 ± 2) °C zu prüfen. Die Probekörper müssen 3 Stunden vor der Prüfung bei Prüftemperatur gelagert werden. Die Dicke a der Probekörper ist vor der Prüfung mit einem Dickenmessgerät auf ± 0,01 mm zu ermitteln. Die Probe wird in die Einspannklemmen der Zugprüfmaschine gespannt und mit einer Vorschubgeschwindigkeit von v = 500 mm/min gerissen: Dabei ist darauf zu achten, dass der Schlitz vom Prüfer aus auf der linken Seite liegt.

Die beiden Prüfkörper mit dem höchsten und dem niedrigsten Wert werden bei der Auswertung nicht berücksichtigt. Der Weiterreißwiderstand δw1 in [N/mm] berechnet sich aus den Variablen Fmax1 (Höchstkraft in [N]) sowie a1 (Dicke in [mm]) und wird als Mittelwert der verbleibenden Einzelmessungen angegeben:

$$Weiterreißwiderstand\ \delta_{w1} = \frac{F_{max1}}{a_1}$$

### 3.6 Beurteilung der Ergebnisse

Zur Beurteilung der Standfestigkeit von Siliconkautschukformulierungen, in die die erfindungsgemäßen Kieselsäuren eingearbeitet wurden, dienen die Messergebnisse für die Fließgrenze nach Casson und die Viskosität bei einer Scherrate von 1/10 (Tabelle 3).

Unter Standfestigkeit ist das rheologische Verhalten einer RTV-1K-Silicondichtmasse zu verstehen. Als gute Standfestigkeit wird bezeichnet, wenn Siliconkautschuk, auf eine senkrechte Fläche appliziert, dort über 24 h während der Aushärtung ohne Verlaufen haftet. Eine ausreichend gute Standfestigkeit kann man an einer Viskosität von ≥ 100 Pas und einer Fließgrenze von ≥ 90 Pa erkennen. Die Werte für die Fließgrenze nach Casson der Siliconkautschukformulierungen der Beispiele 3a bis 3d zeigen deutlich, das die Fließgrenze der Silikonkautschukformulierung enthaltend die erfindungsgemäßen Kieselsäure nach Beispiel 1 mit einem Wert von 100 Pas wesentlich höher liegt als bei den Formulierungen mit den Vergleichskieselsäuren. Bei der Silikonkautschukformulierung 3b mit der erfindungsgemäßen Kieselsäure nach Beispiel 2 ist dieser Effekt mit einer Fließgrenze nach Casson von 260 noch sehr viel stärker ausgeprägt. D. h. das Siliconkautschukformulierungen, in die die erfindungsgemäßen Kieselsäuren eingearbeitet wurden, auf grund der besonderen Eigenschaften der erfindungsgemäßen Kieselsäuren eine höhere Standfestigkeit aufweisen. Solche Formulierungen bleiben in der Form bestehen, in der sie appliziert wurden und zeigen keine Neigung zum Verlaufen. Dies wird auch durch die Viskositätswerte bestätigt. So zeigen die erfindungsgemäßen Kieselsäuren gegenüber den Vergleichsbeispielen eine gleiche bzw. in Beispiel 2 deutlich verbesserte, d. h. höhere Viskosität.

Die mechanische Stabilität (Zugfestigkeit und Weiterreißwiderstand) sowie die Flexibilität (Bruchdehnung) der ausgehärteten Siliconkautschukformulierungen 3a bis 3d kann durch deren Verhalten bei Zugbelastung unter verschiedenen Bedingungen beurteilt werden (Tabelle 4).

Die Messergebnisse für die mechanischen Eigenschaften können wie folgt interpretiert werden: Für die Silikonkautschukformulierung 3d enthaltend die Kieselsäure nach das Vergleichsbeispiel 2 ist es überhaupt nicht möglich Siliconvulkanisate herzustellen (vollständige Aushärtung direkt nach Herstellung), demnach sind die mechanischen Eigenschaften auch nicht messbar. Die Messwerte für die erfindungsmäße Kieselsäure zeigen, das die Mindestanforderungen an die mechanische Stabilität (Zugfestigkeit und Weiterreißwiderstand) sowie die Flexibilität (Bruchdehnung) der ausgehärteten Siliconkautschukformulierungen erfüllt werden. Im Vergleich zum Vergleichsbeispiel 1 (Silikonkautschukformulierung 3c) führen die erfindungsgemäßen Kieselsäuren der Beispiele 1 und 2 in den Silikonkautschuklformulierungen 3a und 3b zu einer besseren mechanischen Stabilität (höhere Messwerte für Zugfestigkeit und Weiterreißwiderstand) sowie einer gleichen bzw. besseren Flexibilität (gleiche oder höhere Messwerte für die Bruchdehnung).

Die Lagerstabilität, d. h. die Änderung der rheologischen Eigenschaften wie Fließgrenze und Viskosität sowie das negative Aushärtverhalten in der Tube über die Zeit, wird in den Tabellen 5 und 6 dargestellt. Dabei wurde sowohl die Lagerung bei Raumtemperatur als auch bei erhöhter Temperatur (50°C) betrachtet. Es zeigt sich deutlich, das die Siliconkautschukformulierungen 3a und 3b mit den erfindungsgemäßen Kieselsäuren nach Beispielen 1 und 2 über den untersuchten Lagerungszeitraum von 35 Tagen sich nicht oder nur unwesentlich in ihren rheologischen Eigenschaften, Viskosität bei Scherrate 1/10 und Fließgrenze nach Casson, verändern. D. h. die guten Verdickungs- sowie Verarbeitungseigenschaften (wie z.B. Extrudierbarkeit bzw. Auspressbarkeit) sind auch noch nach der Lagerung unter den genannten Bedingungen vorhanden, ohne das die Dichtmasse bereits in der Tube vorvernetzt bzw. ausvulkanisiert ist.

Demgegenüber ist für das Vergleichsbeispiel 1 schon in den ersten 21 Tagen eine negative Veränderung der rheologischen Eigenschaften zu beobachten. Im Vergleich zu den Ausgangswerten steigt die Viskosität und Fließgrenze deutlich an, was auf eine frühzeitige Vernetzung der Dichtmasse hindeutet. Zwischen dem 21. und 28. Tag härtet die Probe bereits in der Tube aus und ist damit nicht mehr verarbeitbar. Ähnlich verhält es sich nach Lagerung bei erhöhter Temperatur. Dort tritt das frühzeitige Aushärten von Vergleichsbeispiel 1 schon zwischen dem 2. und 7. Tag ein. Noch schlechter verhält sich die Fällungskieselsäure Ultrasil® VN 3. Hier ist die Siliconkautschukmasse sofort nach der Herstellung ausgehärtet und eine Abfüllung in die Kartusche (Tube) ist gar nicht mehr möglich bzw. diese Siliconkautschukmasse ist nicht für die RTV-1K Anwendungen geeignet.

Tabelle 3

| **Beispiel** | **Eingesetzte Kieselsäure aus** | **Beladung [%]** | **Gehalt an Vernetzer [g]** | **Stabilisator GE TP 3556 [g]** | **Fließgren ze Casson [Pa]** | **Viskosität** bei 10 1/s **[Pa*s]** |
|---|---|---|---|---|---|---|
| 3a | Beispiel 1 | 12 | 42,0 | 8,0 | 103 | 100 |
| 3b | Beispiel 2 | 12 | 42,0 | 8,0 | 260 | 118 |
| 3c | Vergleichsbeispiel 1 | 12 | 42, 0 | 8, 0 | 13 | 102 |
| 3d | Vergleichsbeispiel 2 | 12 | 42,0 | 8,0 | / | / |

Tabelle 4

| **Beispiel** | **Eingesetzte Kieselsäure aus** | **Beladung [%]** | **Zugfestigkeit [N/mm$^2$]** | **Weiterreißwiderstand [N/mm]** | **Bruchdehnung [%]** |
|---|---|---|---|---|---|
| 3a | Beispiel 1 | 12 | 2,7 | 13 | 545 |
| 3b | Beispiel 2 | 12 | 3,2 | 12 | 622 |
| 3c | Vergleichsbeispiel 1 | 12 | 2,5 | 11 | 590 |
| 3d | Vergleichsbeispiel 2 | 12 | - | - | - |

**Tabelle 5: Rheologie über 35 Tage bei RT**

| **Beispiel** | **Eingesetzte Kieselsäure aus** | **Beladung in [%]** | **Gehalt an Vernetzer in [g]** | **Temp. in [°C]** | **Dauer in [d]** | **Visk. bei 10 1/s in [Pa*s]** | **Fließgrenze Casson in [Pa]** |
|---|---|---|---|---|---|---|---|
| 3a | Beispiel 1 | 12 | 42 | 23 | 0 | 100 | 103 |
| | | | | | 35 | 104 | 99 |
| 3b | Beispiel 2 | 12 | 42 | 23 | 0 | 118 | 260 |
| | | | | | 35 | 124 | 270 |
| 3c | Vergleichsbeispiel 1 | 12 | 42 | 23 | 0 | 102 | 13 |
| | | | | | 21 | 173 | 77 |
| | | | | | | Vorvernetzung in der Tube ab dem 22.-28. Tag | |
| 3d | Vergleichsbeispiel 2 | 12 | 42 | 23 | 0 | Direkt nach Fertigstellung vollständig vernetzt | |

Tabelle 6: Rheologie über 35 Tage bei 50 °C

| **Beispiel** | **Eingesetzte Kieselsäure aus** | **Beladung in [%]** | **Gehalt an Vernetzer in [g V]** | **Temp. in [°C]** | **Dauer in [d]** | **Visk. bei 10 1/s in [Pa*s]** | **Fließgrenze Casson in [Pa]** |
|---|---|---|---|---|---|---|---|
| 3a | Beispiel 1 | 12 | 42 | 50 | 0 | 96 | 94 |
| | | | | | 35 | 109 | 123 |

(fortgesetzt)

| Beispiel | Eingesetzte Kieselsäure aus | Beladung in [%] | Gehalt an Vernetzer in [g V] | Temp. in [°C] | Dauer in [d] | Visk. bei 10 1/s in [Pa*s] | Fließgrenze Casson in [Pa] |
|---|---|---|---|---|---|---|---|
| 3b | Beispiel 2 | 12 | 42 | 50 | 0 | 113 | 252 |
| | | | | | 35 | 112 | 279 |
| 3c | Vergleichsbeispiel 1 | 12 | 42 | 50 | 0 | 218 | 96 |
| | | | | | | Vorvernetzung in der Tube ab dem 02.-07. Tag | |
| 3d | Vergleichsbeispiel 2 | 12 | 42 | 50 | 0 | Direkt nach Fertigstellung vollständig vernetzt | |

**Bezugszeichenliste für Figuren 7, 8a und 8b**

1 Strahlmühle
2 zylindrisches Gehäuse
3 Mahlkammer
4 Mahlgutaufgabe
5 Mahlstrahleinlass
5a Heizdüsen
6 Produktauslass
7 Windsichter
8 Sichtrad
9 Einlassöffnung oder Einlassdüse
10 Mahlstrahl
11 Heizquelle
12 Heizquelle
13 Zuführungsrohr
14 temperaturisolierender Mantel
15 Einlass
16 Auslass
17 Zentrum der Mahlkammer
18 Reservoir- oder Erzeugungseinrichtung
19 Leitungseinrichtungen
20 Austrittsstutzen (Tauchrohr)
21 Sichtergehäuse
22 Gehäuseoberteil
23 Gehäuseunterteil
24 Umfangsflansch
25 Umfangsflansch
26 Gelenk
27 Pfeil
28 Sichtraumgehäuse
28a Tragarme
29 Austragkonus
30 Flansch
31 Flansch
32 Deckscheibe
33 Deckscheibe
34 Schaufel
35 Sichtradwelle
35a Drehlager

36 obere bearbeitete Platten
37 untere bearbeitete Platte
38 Gehäuseendabschnitt
39 Produktaufgabestutzen
40 Drehachse
41 Austrittskammer
42 obere Deckplatte
43 abnehmbarer Deckel
44 Tragarme
45 kegelförmiges Ringgehäuse
46 Ansaugfilter
47 Lochplatte
48 Feingutaustragrohr
49 Abweiskegel
50 Sichtlufteintrittsspirale
51 Grobgutaustrag
52 Flansch
53 Flansch
54 Dispersionszone
55 an der Innenkante bearbeitete (angefaste) Flansche und Auskleidung
56 auswechselbares Schutzrohr
57 auswechselbares Schutzrohr
58 Feingutaustritt/-auslass
59 Schaufelkranz

**Patentansprüche**

**1.** Fällungskieselsäure
**dadurch gekennzeichnet,**
**dass** sie ein Extinktionsverhältnis $SiOH_{isoliert}$ von größer gleich 1 aufweist, wobei das Extinktionsverhältnis $SiOH_{isoliert}$ mittels IR-Spektroskopie, wie im Absatz der Beschreibung mit der Überschrift IR-Bestimmung beschrieben, ermittelt wird.

**2.** Fällungskieselsäure nach Anspruch 1,
**dadurch gekennzeichnet,**
**dass** die Silanolgruppendichte 0,5 bis 3,5 SiOH/nm$^2$ beträgt.

**3.** Fällungskieselsäure nach Anspruch 1 oder 2,
**dadurch gekennzeichnet,**
**dass** die modifizierte Stampfdichte kleiner gleich 70 g/l beträgt.

**4.** Fällungskieselsäure nach einem der Ansprüche 1 oder 3,
**dadurch gekennzeichnet,**
**dass** sie folgende Eigenschaften

| | |
|---|---|
| BET-Oberfläche | 50 - 600 m$^2$/g |
| CTAB-Oberfläche | 50 - 350 m$^2$/g |
| DBP (wasserfrei) | 150 - 400 g/100g |

aufweist.

**5.** Fällungskieselsäure nach einem der Ansprüche 1 bis 4,
**dadurch gekennzeichnet,**
**dass** 5 bis 100 % der Partikel der volumenbezogenen Partikelverteilungskurve < 1 $\mu$m sind.

**6.** Fällungskieselsäure nach einem der Ansprüche 1 bis 5,

**dadurch gekennzeichnet,**
**dass** der $d_{90}$ -Wert nicht größer als 0,01 - 10 μm ist.

**7.** Fällungskieselsäure nach einem der Ansprüche 1 bis 6,
**dadurch gekennzeichnet,**
**dass** die Partikelverteilungskurve bimodal ist.

**8.** Fällungskieselsäure nach einem der Ansprüche 1 bis 7,
**dadurch gekennzeichnet,**
**dass** der Glühverlust 0,1 - 3,0 Gew.-% beträgt.

**9.** Fällungskieselsäure nach einem der Ansprüche 1 bis 8,
**dadurch gekennzeichnet,**
**dass** der Trocknungsverlust 0,1 - 3,0 Gew.-% beträgt.

**10.** Fällungskieselsäure nach einem der Ansprüche 1 bis 9,
**dadurch gekennzeichnet,**
**dass** der pH-Wert 4 - 8 beträgt.

**11.** Fällungskieselsäure nach einem der Ansprüche 1 bis 10,
**dadurch gekennzeichnet,**
**dass** es sich um eine hydrophile Fällungskieselsäure handelt.

**12.** Verfahren zur Herstellung einer Kieselsäure gemäß einem der Ansprüche 1 bis 11,
**dadurch gekennzeichnet,**
**dass** das Verfahren folgende Schritte umfasst:

1. Umsetzung von zumindest einem Silikat mit zumindest einem Säuerungsmittel
2. Filtration und Waschen der erhaltenen Kieselsäure
3. Trocknung der erhaltenen Kieselsäure bzw. des Filterkuchens
4. Temperung der getrockneten Kieselsäure in einem Wirbelbett- oder Fließbettreaktor.

**13.** Verfahren nach Anspruch 12,
**dadurch gekennzeichnet,**
**dass** Schritt 1 die folgenden Teilschritte umfasst

1a Herstellung einer Vorlage aus Wasser bzw. Wasser und zumindest einem Silikat und/oder einer Silikatlösung, wobei der pH-Wert der so erhaltenen Vorlage bevorzugt zwischen pH 5 und pH 10 und die Temperatur der Vorlage bevorzugt zwischen 80 und 100 °C liegt.
1b Dosierung zumindest eines Silikats und/oder einer Silikatlösung und zumindest eines Säuerungsmittels unter Rühren bei 80 bis 100 °C in die Vorlage aus Teilschritt 1a) so lange, bis ein Feststoffgehalt der Fällsuspension erreicht ist, der zu dem in Teilschritt 1c) zu erreichenden Feststoffgehalt führt.
1c Zugabe eines Säuerungsmittels bei einer Temperatur der Fällsuspension von 80 bis 100 °C, so das der pH-Wert der Fällsuspension auf 2 bis 6 erniedrigt wird und der Feststoffgehalt der Fällsuspension am Ende dieses Teilschritts zwischen 30 und 70 g/l liegt.

**14.** Verfahren nach Anspruch 13,
**dadurch gekennzeichnet,**
**dass** der pH-Wert für die Dauer von Teilschritt 1b) konstant auf einem Wert zwischen pH 7 und pH 10 gehalten wird.

**15.** Verfahren nach einem der Ansprüche 12 bis 14,
**dadurch gekennzeichnet,**
**dass** die erfindungsgemäßen Kieselsäuren in einem Schritt 3a, d. h. zwischen den Schritten 3 und 4 oder in einem Schritt 5, d. h. nach Schritt 4, oder sowohl in Schritt 3a, d. h. zwischen Schritt 3 und 4, als auch in Schritt 5, d. h. nach Schritt 4, vermahlen werden.

**16.** Verfahren nach Anspruch 15,
**dadurch gekennzeichnet,**

**dass** die Mahlparameter so gewählt werden, dass das vermahlene Produkt im Bereich < 1 μm der volumenbezogenen Partikelverteilung einen Anteil an feinen Partikeln von 5 bis 100 % und/oder einen $d_{90}$ -Wert der volumenbezogene Partikelverteilungskurve zwischen 0,001 und 10 μm aufweist

**17.** Verfahren nach Anspruch 16,
**dadurch gekennzeichnet,**
**dass** ein Wirbelbettreaktor verwendet wird
und das die folgenden Teilschritte

4a. Einfüllen der Kieselsäure in den Wirbelbettreaktor,
4b. Vorheizen des Reaktors auf 300 bis 800 °C, wobei gleichzeitig der Reaktor von einem Inertgas und/oder Stickstoff-Luft-Gemisch so durchströmt wird, das sich eine Fluidierungsgeschwindigkeit von 0,02 bis 0,06 m/s einstellt,
4c. Einspeisung eines Gasgemisches I aus Wasserdampf und einem Inertgas, oder eines Gasgemisches II aus Wasserdampf, einem Inertgas und Luft bei 300 bis 800 °C für die Dauer von 0,25 bis 6 h, wobei das Gasgemisch den Reaktor mit einer Fluidisierungsgeschwindigkeit von 0,02 bis 0,06 m/s durchströmt und die Gasgemische I und II eine Wasserdampfkonzentration von 10 bis 95 Vol.-% und im Falle des Gasgemisches II einen Sauerstoffgehalt von 0,01 bis 21 Vol.-% aufweisen,
4d. Unterbrechung der Dampfzugabe und Austreiben des Dampfes durch ein Inertgas, z. B. Stickstoff, und/oder ein Inertgas-Luft-Gemisch bei 300 bis 800 °C, wobei das Gas bzw. Gasgemisch den Reaktor mit einer Fluidisierungsgeschwindigkeit von 0,02 bis 0,06 m/s durchströmt und im Falle der Verwendung des Inertgas-Luft-Gemisches dieses einen Sauerstoffgehalt von 0,01 bis 21 Vol.-% aufweist.
4e Abkühlung der getemperten Kieselsäure auf Raumtemperatur in einer trockenen Prozeßatmosphäre, wobei bei Verwendung eines Inertgas-Luft-Gemisches dieses einen Sauerstoffgehalt von 0,01 bis 21 Vol.-% aufweist

durchgeführt werden.

**18.** Verwendung von Fällungskieselsäuren gemäß einem der Ansprüche 1 bis 11 zur Herstellung von Dichtungsmassen.

**19.** Verwendung nach Anspruch 18,
**dadurch gekennzeichnet,**
**dass** es sich bei der Dichtungsmasse um RTV-1K-Siliconkautschuk bzw. um Silicondichtungsmassen der verschiedenen Vernetzungssysteme (acetoxy-vernetzend, alcoxy-vernetzend und/oder oxim-vernetzend) handelt.

**20.** Dichtungsmasse enthaltend zumindest eine Fällungskieselsäure gemäß einem der Ansprüche 1 bis 11.

**21.** Dichtungsmasse nach Anspruch 20,
**dadurch gekennzeichnet,**
**dass** es sich bei der Dichtungsmasse um RTV-1K-Siliconkautschuk bzw. um Silicondichtungsmassen der verschiedenen Vernetzungssysteme (acetoxy-vernetzend, alcoxy-vernetzend und/oder oxim-vernetzend) handelt.

**22.** Verwendung der Dichtungsmasse gemäß Anspruch 18 oder 19 in der Bauindustrie als Fugendichtungsmassen, in der Automobilindustrie als Kleb- und Dichtstoff und/oder als Beschichtungsmassen für Textilgewebe.

## Claims

**1.** Precipitated silica **characterized in that** it has an $SiOH_{isolated}$ absorbance ratio of greater than or equal to 1, the $SiOH_{isolated}$ absorbance ratio being ascertained by means of IR spectroscopy, as described in the section of the description having the heading IR determination.

**2.** Precipitated silica according to Claim 1, **characterized in that** the silanol group density is 0.5 to 3.5 $SiOH/nm^2$.

**3.** Precipitated silica according to Claim 1 or 2, **characterized in that** the modified tapped density is less than or equal to 70 g/l.

**4.** Precipitated silica according to either of Claims 1 and 3, **characterized in that** it has the following properties:

| | |
|---|---|
| BET surface area | 50 - 600 $m^2/g$ |
| CTAB surface area | 50 - 350 $m^2/g$ |
| DBP (anhydrous) | 150 - 400 g/100 g. |

**5.** Precipitated silica according to any one of Claims 1 to 4, **characterized in that** 5% to 100% of the particles in the volume-based particle distribution curve are < 1 $\mu$m.

**6.** Precipitated silica according to any one of Claims 1 to 5, **characterized in that** the $d_{90}$ value is not greater than 0.01 - 10 $\mu$m.

**7.** Precipitated silica according to any one of Claims 1 to 6, **characterized in that** the particle distribution curve is bimodal.

**8.** Precipitated silica according to any one of Claims 1 to 7, **characterized in that** the loss on ignition is 0,1% - 3.0% by weight.

**9.** Precipitated silica according to any one of Claims 1 to 8, **characterized in that** the loss on drying is 0,1% - 3.0% by weight.

**10.** Precipitated silica according to any one of Claims 1 to 9, **characterized in that** the pH is 4 - 8.

**11.** Precipitated silica according to any one of Claims 1 to 10, **characterized in that** it is a hydrophilic precipitated silica.

**12.** Process for preparing a silica according to any one of Claims 1 to 11, **characterized in that** the process comprises the following steps:

1. reacting at least one silicate with at least one acidifier
2. filtering and washing the resulting silica
3. drying the resulting silica or filtercake
4. heat-treating the dried silica in a fluidized-bed or fluid-bed reactor.

**13.** Process according to Claim 12, **characterized in that** step 1 comprises the following substeps:

1a preparing an initial charge of water or of water and at least one silicate and/or a silicate solution, the pH of the resulting initial charge being preferably between 5 and 10 and the temperature of the initial charge being preferably between 80 and 100°C.
1b metering at least one silicate and/or a silicate solution and at least one acidifier into the initial charge from substep 1a) with stirring at 80 to 100°C until the solids content of the precipitation suspension reaches a level which leads to the solids content which is to be reached in substep 1c).
1c adding an acidifier at a temperature of the precipitation suspension of 80 to 100°C, so that the pH of the precipitation suspension is lowered to 2 to 6 and the solids content of the precipitation suspension at the end of this substep is between 30 and 70 g/l.

**14.** Process according to Claim 13, **characterized in that** for the period of substep 1b) the pH is held constantly at a level between 7 and 10.

**15.** Process according to any one of Claims 12 to 14, **characterized in that** the silicas of the invention are ground in a step 3a, i.e. between steps 3 and 4, or in a step 5, i.e. after step 4, or both in step 3a, i.e. between steps 3 and 4, and in step 5, i.e. after step 4.

**16.** Process according to Claim 15, **characterized in that** the grinding parameters are selected such that the ground product in the range < 1 $\mu$m of the volume-based particle distribution has a fine-particle fraction of 5% to 100% and/or a $d_{90}$ value in the volume-based particle distribution curve of between 0.001 and 10 $\mu$m.

**17.** Process according to Claim 16, **characterized in that** a fluidized-bed reactor is used and **in that** the following

substeps are carried out:

4a. introducing the silica into the fluidized-bed reactor,
4b. preheating the reactor to 300 to 800°C, the reactor being traversed at the same time by a flow of inert gas and/or nitrogen/air mixture in such a way as to produce a fluidization velocity of 0.02 to 0.06 m/s,
4c. feeding in a gas mixture I comprising steam and an inert gas, or a gas mixture II comprising steam, an inert gas and air, at 300 to 800°C for a period of 0.25 to 6 h, the gas mixture traversing the reactor with a fluidization velocity of 0.02 to 0.06 m/s, and the gas mixtures I and II having a steam concentration of 10 to 95% by volume and in the case of gas mixture II an oxygen content of 0.01% to 21% by volume,
4d. interrupting the addition of steam and expelling the steam by means of an inert gas, nitrogen for example, and/or of an inert gas/air mixture at 300 to 800°C, the gas or gas mixture traversing the reactor with a fluidization velocity of 0.02 to 0.06 m/s, and, if using an inert gas/air mixture, said mixture having an oxygen content of 0.01% to 21% by volume,
4e. cooling the heat-treated silica to room temperature in a dry process atmosphere, and, if using an inert gas/air mixture, said mixture having an oxygen content of 0.01% to 21% by volume.

**18.** Use of precipitated silicas according to any one of Claims 1 to 11 for producing sealants.

**19.** Use according to Claim 18, **characterized in that** the sealant is RTV-1K silicone rubber or a silicone sealant of the various crosslinking systems (acetoxy-crosslinking, alkoxy-crosslinking and/or oxime-crosslinking).

**20.** Sealant comprising at least one precipitated silica according to any one of Claims 1 to 11.

**21.** Sealant according to Claim 20, **characterized in that** the sealant is RTV-1K silicone rubber or a silicone sealant of the various crosslinking systems (acetoxy-crosslinking, alkoxy-crosslinking and/or oxime-crosslinking).

**22.** Use of the sealant according to Claim 18 or 19 in the building industry as a joint-sealant, in the automotive industry as an adhesive and sealant and/or as a coating material for textile fabric.

**Revendications**

**1.** Silice précipitée, **caractérisée en ce qu'**elle présente un rapport d'extinction $SiOH_{isolé}$ supérieur à 1, le rapport d'extinction $SiOH_{isolé}$ étant déterminé par spectroscopie IR, comme décrit dans le paragraphe de la description sous le titre détermination IR.

**2.** Silice précipitée selon la revendication 1, **caractérisée en ce que** la densité de groupes silanol est de 0,5 à 3,5 groupes SiOH/$nm^2$.

**3.** Silice précipitée selon la revendication 1 ou 2, **caractérisée en ce que** la densité tassée modifiée est inférieure à 70 g/l.

**4.** Silice précipitée selon l'une quelconque des revendications 1 ou 3, **caractérisée en ce qu'**elle présente les propriétés suivantes :

| | |
|---|---|
| Surface BET | 50-600 $m^2$/g |
| Surface CTAB | 50-350 $m^2$/g |
| DBP (anhydre) | 150-400 g/100 g. |

**5.** Silice précipitée selon l'une quelconque des revendications 1 à 4, **caractérisée en ce que** 5 à 100% des particules de la courbe de répartition volumique des particules sont < 1 μm.

**6.** Silice précipitée selon l'une quelconque des revendications 1 à 5, **caractérisée en ce que** la valeur $d_{90}$ n'est pas supérieure à 0,01-10 μm.

**7.** Silice précipitée selon l'une quelconque des revendications 1 à 6, **caractérisée en ce que** la courbe de répartition

des particules est bimodale.

8. Silice précipitée selon l'une quelconque des revendications 1 à 7, **caractérisée en ce que** la perte au feu est de 0,1-3,0% en poids.

9. Silice précipitée selon l'une quelconque des revendications 1 à 8, **caractérisée en ce que** la perte au séchage est de 0,1-3,0% en poids.

10. Silice précipitée selon l'une quelconque des revendications 1 à 9, **caractérisée en ce que** le pH vaut 4-8.

11. Silice précipitée selon l'une quelconque des revendications 1 à 10, **caractérisée en ce qu'**il s'agit d'une silice précipitée hydrophile.

12. Procédé pour la préparation d'une silice selon l'une quelconque des revendications 1 à 11, **caractérisé en ce que** le procédé comprend les étapes suivantes :

   1. transformation d'au moins un silicate avec au moins un agent d'acidification
   2. filtration et lavage de la silice obtenue
   3. séchage de la silice ou du gâteau de filtration obtenu(e)
   4. traitement thermique de la silice séchée dans un réacteur à lit tourbillonnant ou fluidisé.

13. Procédé selon la revendication 12, **caractérisé en ce que** l'étape 1 comprend les étapes partielles suivantes

   la préparation d'une charge préalable d'eau ou, selon le cas, d'eau et d'au moins un silicate et/ou une solution de silicate, le pH de la charge préalable ainsi obtenue se situant de préférence entre pH 5 et pH 10 et la température de la charge préalable se situant de préférence entre 80 et 100°C,
   1b dosage d'au moins un silicate et/ou d'au moins une solution de silicate et d'au moins un agent d'acidification sous agitation à 80 jusqu'à 100°C dans la charge préalable de l'étape partielle 1a) jusqu'à ce qu'on atteigne une teneur en solides de la suspension de précipitation qui conduit à la teneur en solides à atteindre dans l'étape partielle 1c),
   1c addition d'un agent d'acidification à une température de la suspension de précipitation de 80 à 100°C, de manière telle que le pH de la suspension de précipitation est abaissé de 2 à 6 et que la teneur en solides de la suspension de précipitation à la fin de cette étape partielle se situe entre 30 et 70 g/l.

14. Procédé selon la revendication 13, **caractérisé en ce que** le pH est maintenu constant à une valeur entre pH 7 et pH 10 pendant la durée de l'étape partielle 1b).

15. Procédé selon l'une quelconque des revendications 12 à 14, **caractérisé en ce que** les silices selon l'invention sont broyées dans une étape 3a, c'est-à-dire entre les étapes 3 et 4 ou dans une étape 5, c'est-à-dire après l'étape 4, ou tant dans l'étape 3a, c'est-à-dire entre l'étape 3 et 4, que dans l'étape 5, c'est-à-dire après l'étape 4.

16. Procédé selon la revendication 15, **caractérisé en ce que** les paramètres de broyages sont choisis de manière telle que le produit broyé présente, dans la plage < 1 $\mu$m de la répartition volumique des particules, une proportion de fines particules de 5 à 100% et/ou une valeur $d_{90}$ de la courbe de répartition volumique des particules entre 0,001 et 10 $\mu$m.

17. Procédé selon la revendication 16, **caractérisé en ce qu'**on utilise un réacteur à lit tourbillonnant et qu'on réalise les étapes partielles suivantes

   4a. introduction de la silice dans le réacteur à lit tourbillonnant,
   4b. préchauffage du réacteur à 300 jusqu'à 800°C, le réacteur étant simultanément traversé par un flux de gaz inerte et/ou de mélange azote-air de manière à ce qu'une vitesse de fluidisation de 0,02 à 0,06 m/s se règle,
   4c. injection d'un mélange gazeux I de vapeur d'eau et d'un gaz inerte, ou d'un mélange gazeux II de vapeur d'eau, d'un gaz inerte et d'air à 300 jusqu'à 800°C pendant une durée de 0,25 à 6 h, le mélange gazeux s'écoulant dans le réacteur à une vitesse de fluidisation de 0,02 à 0,06 m/s et les mélanges gazeux I et II présentant une concentration en vapeur d'eau de 10 à 95% en volume et, dans le cas du mélange gazeux II, une teneur en oxygène de 0,01 à 21% en volume,
   4d. interruption de l'addition de vapeur et expulsion de la vapeur par un gaz inerte, par exemple de l'azote,

et/ou par un mélange gaz inerte-air à 300 jusqu'à 800°C, le gaz ou, selon le cas, le mélange gazeux s'écoulant dans le réacteur à une vitesse de fluidisation de 0,02 à 0,06 m/s et, dans le cas de l'utilisation du mélange gaz inerte-air, celui-ci présentant une teneur en oxygène de 0,01 à 21% en volume.
4e. refroidissement de la silice traitée thermiquement à température ambiante dans une atmosphère de procédé sèche, où, lors de l'utilisation d'un mélange gaz inerte-air, celui-ci présente une teneur en oxygène de 0,01 à 21% en volume.

**18.** Utilisation de silices précipitées selon l'une quelconque des revendications 1 à 11 pour la préparation de masses d'étanchéité.

**19.** Utilisation selon la revendication 18, **caractérisée en ce qu'**il s'agit, pour la masse d'étanchéité, d'un caoutchouc de silicone à 1 composant vulcanisant à température ambiante ou, selon le cas, de masses d'étanchéité de silicone présentant différents systèmes de réticulation (réticulation par fonction acétoxy, alcoxy et/ou oxime).

**20.** Masse d'étanchéité contenant au moins une silice précipitée selon l'une quelconque des revendications 1 à 11.

**21.** Masse d'étanchéité selon la revendication 20, **caractérisée en ce qu'**il s'agit, pour la masse d'étanchéité, d'un caoutchouc de silicone à 1 composant vulcanisant à température ambiante ou, selon le cas, de masses d'étanchéité de silicone présentant différents systèmes de réticulation (réticulation par fonction acétoxy, alcoxy et/ou oxime).

**22.** Utilisation de la masse d'étanchéité selon la revendication 18 ou 19 dans l'industrie de la construction comme masses d'étanchéité de joints, dans l'industrie automobile comme adhésif et masse d'étanchéité et/ou comme masses de revêtement pour les tissus textiles.

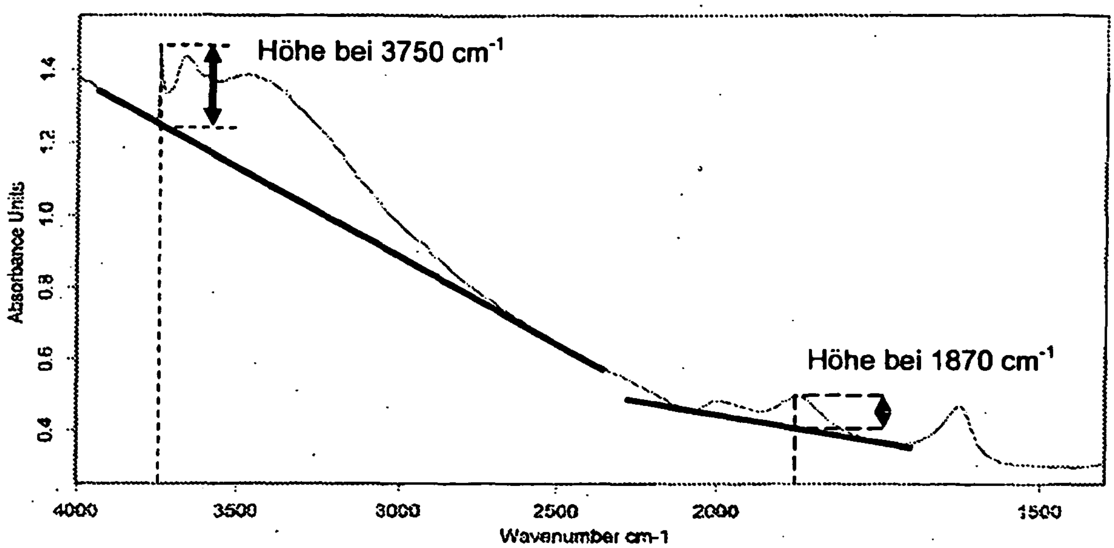


Figur 1: Schema zur Auswertung der IR-Spektren

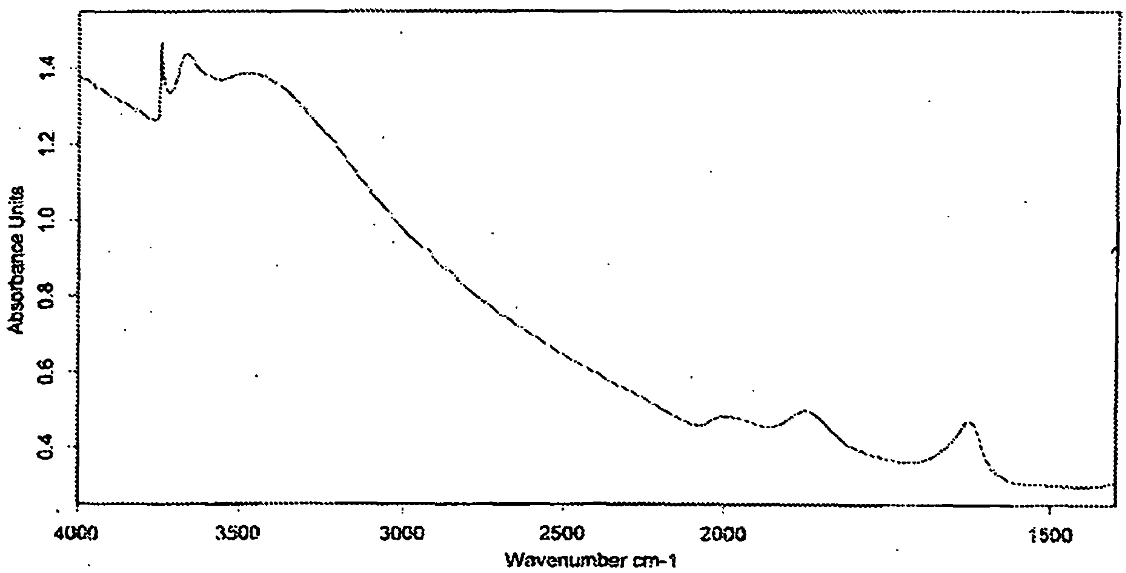


Figur 2: IR-Spektrum der erfindungsgemäßen Fällungskieselsäure gemäß Beispiel 1

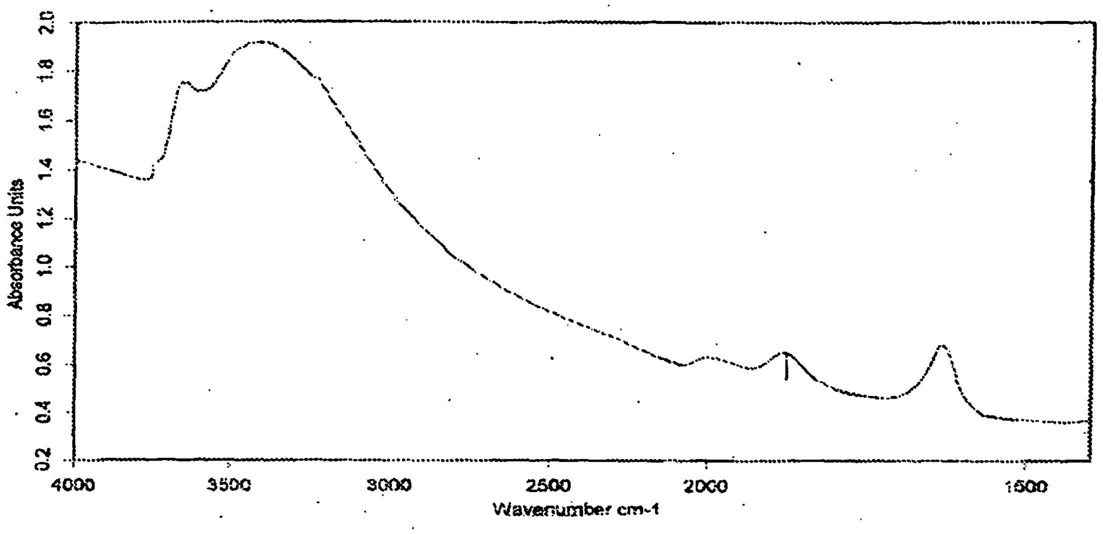


Figur 3: IR-Spektrum von Siloa 72X™ (Vergleichsbeispiel 1)

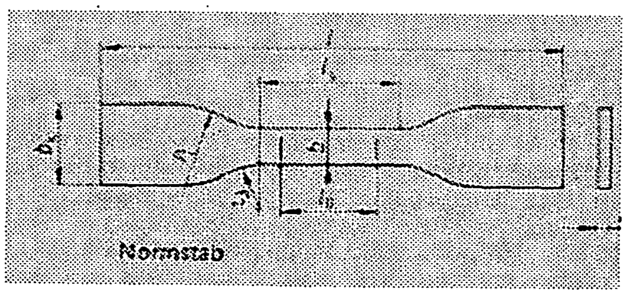


| | Normstab | | | |
|---|---|---|---|---|
| | S1 | S2 | S3 | S3A |
| Gesamtlänge, mindestens l | 115 | 75 | 35 | 50 |
| Breite der Köpfe $b_k$ | 25 | 12,5 | 6 | 8,5 |
| Länge des Steges $l_s$ | 33 | 25 | 12 | 15 |
| Breite des Stegs ± 0,05 | 6 | 4 | 2 | 4 |
| Übergangshalbmesser, innen $r_1$ | 25 | 12,5 | 2,2 | 0 |
| Übergangshalbmesser, außen $r_2$ | 14 | 8 | 2,2 | 10 |
| Dicke a | 1,5 bis 3,0 | 1,5 bis 3,0 | 1,5 bis 3,0 | 1,5 bis 3,0 |
| Vorzugsmaße | 2,0 | 2,0 | 1,0 | 2,0 |
| Meßlänge $L_0$ | 25 | 20 | 10 | 10 |

Figur 4: Form und Maße der verwendeten Normstäbe

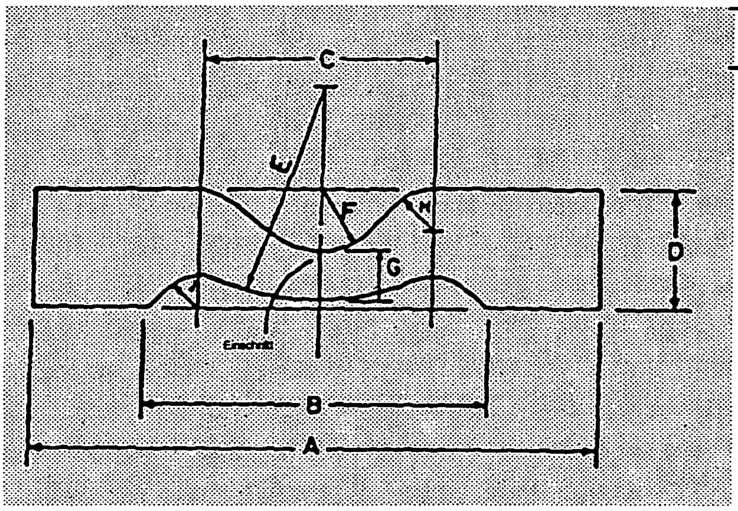


| Maß | Millimeter | |
|---|---|---|
| | Größe | Toleranz |
| A | 110 | ± 0,50 |
| B | 68 | ± 0,50 |
| C | 45 | ± 0,50 |
| D | 25 | ± 0,50 |
| E | 43 | ± 0,50 |
| F | 12,5 | ± 0,50 |
| G | 10,2 | ± 0,50 |
| H | 9 | ± 0,50 |
| J | 7,5 | ± 0,50 |
| Einschnitt | 0,5 | ± 0,50 |

Figur 5: Form und Maße der Prüfkörper

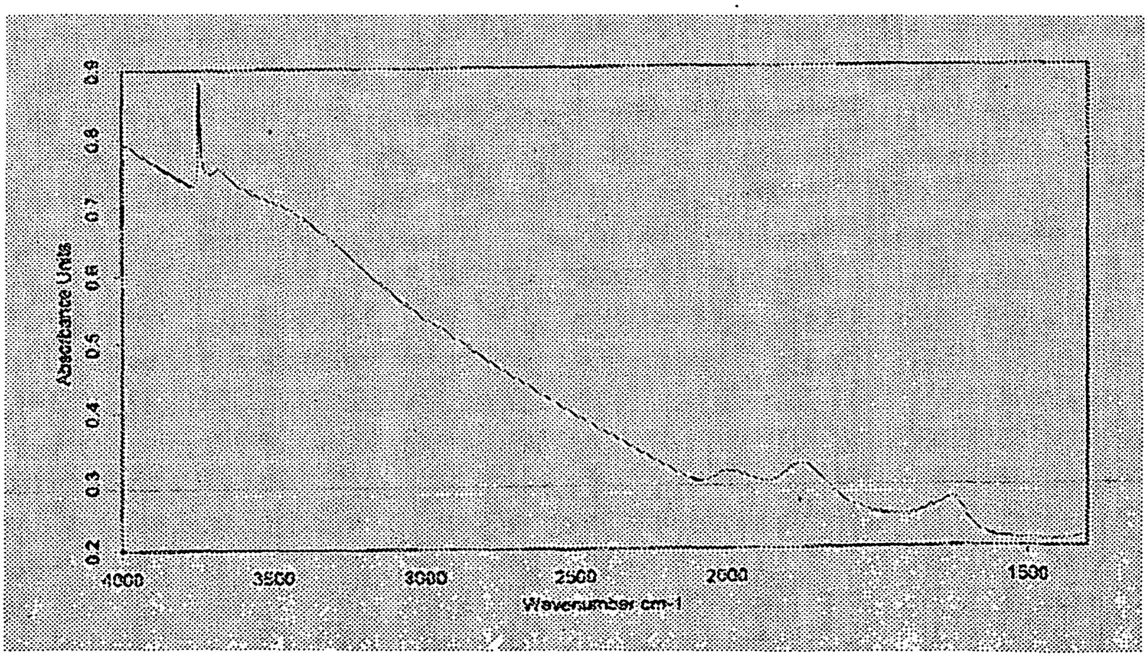


Figur 6: IR-Spektrum der erfindungsgemäßen Fällungskieselsäure gemäß Beispiel 2

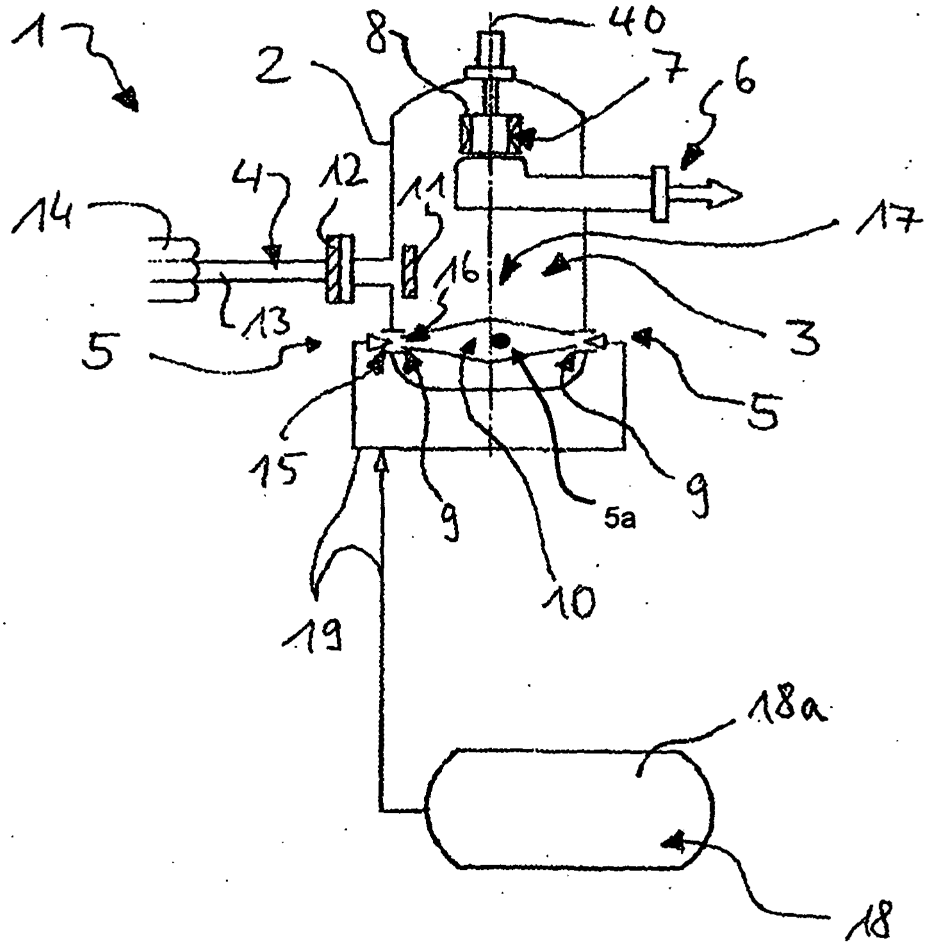


Figur 7

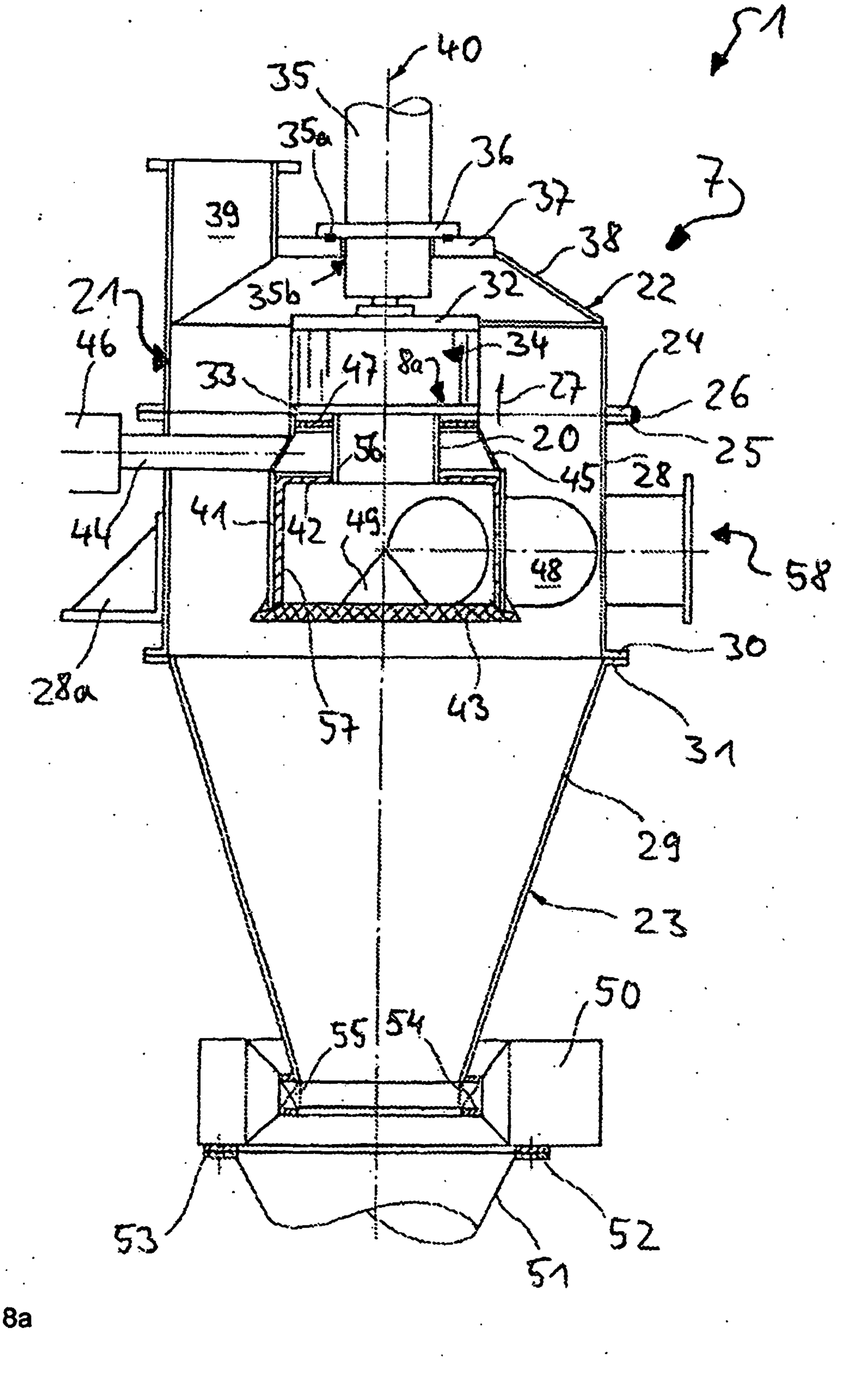
51
40
35
35a
36
37
7
38
39
21
22
35b
32
46
34
24
33
47
8a
27
26
20
56
25
45
28
44
41
42
49
48
58
28a
30
57
43
31
29
23
50
55
54
53
52
51

Figur 8a

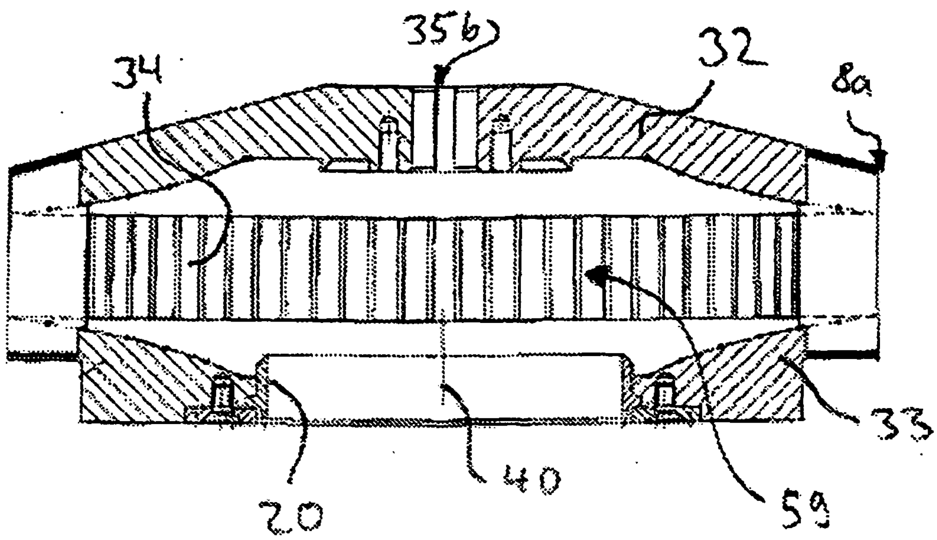


Figur 8b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2005061384 A
- EP 1557446 A
- EP 0643015 A
- DE 2447613
- US 4094771 A
- DE 102006048850


### In der Beschreibung aufgeführte Nicht-Patentliteratur


- **S. Brunauer ; P. H. Emmett ; E. Teller.** Adsorption of Gases in Multimolecular Layers. *J. Am. Chem. Soc.,* 1938, vol. 60, 309
- **Janzen ; Kraus.** *Rubber Chem. Technol.,* 1971, vol. 44, 1287
- **W.T. Yen ; R.S. Chahal ; T. Salman.** *Can. Met. Quart.,* 1973, vol. 12 (3